# EUROPEAN PATENT APPLICATION

(11) **EP 4 837 883 A1**
(43) Date of publication of application: **11.11.2026**
(21) Application number: 26195189.1
(22) Date of filing: 30.05.2024
(51) Int. Cl.: C01B 33/029, C01B 32/05, C01B 33/035, H01M 4/38, H01M 4/1395

(54) **SILICON-CONTAINING COMPOSITE PARTICLES**

(30) Priority: 30.05.2023 GB 202308084; 01.06.2023 GB 202308225; 15.08.2023 GB 202312470
(62) Document number(s) of the earlier application(s) in accordance with Art. 76 EPC: 24731257.2 / 4 719 983
(71) Applicant: Nexeon Limited, Abingdon, Oxfordshire OX14 4SB (GB)
(72) Inventor: WHITTAM, Joshua, Abingdon, OX14 4SB (GB); BELL, Gavin, Abingdon, OX14 4SB (GB); CLARKE, Samuel, Abingdon, OX14 4SB (GB); MUTIBA, Tapiwa, Abingdon, OX14 4SB (GB); MASON, Charles, Abingdon, OX14 4SB (GB)
(74) Representative: Gill Jennings & Every LLP

(57) **Abstract**

This invention relates to a process for preparing composite particles suitable as anode active materials in metal ion batteries. Thermal decomposition of a silicon-containing precursor material is used to deposit a plurality of nanoscale silicon domains into the pore network of porous particles comprising micropores and mesopores. The composite particles are subsequently subjected to a stabilisation treatment using liquid water or water vapour at elevated temperature which is found to reduce the problem of hydrogen evolution during the processing of the composite particles to form electrodes.

## Description

### INTRODUCTION

This invention relates to the preparation of composite particles comprising silicon deposited into the pores of a porous particle framework. The process relates in particular to improved processes that reduce the susceptibility of the composite particles to oxidation upon exposure to water. The invention also relates to novel composite particles with reduced susceptibility to oxidation upon exposure to water as indicated by the evolution of hydrogen gas over time.

### BACKGROUND TO THE INVENTION

Lithium-ion batteries (LIBs) comprise in general an anode, a cathode and a lithium-containing electrolyte. The anode generally comprises a metal current collector coated with a layer of an electroactive material, defined herein as a material which is capable of inserting and releasing lithium ions during the charging and discharging of a battery. When a LIB is charged, lithium ions are transported from the cathode via the electrolyte to the anode and are inserted into the electroactive material of the anode as intercalated lithium atoms. The terms "cathode" and "anode" are therefore used herein in the sense that the battery is placed across a load, such that the anode is the negative electrode. The term "battery" is used herein to refer both to devices containing a single lithium-ion cell and to devices containing multiple connected lithium-ion cells.

Conventional LIBs use graphite as the anode electroactive material. Graphite anodes can accommodate a maximum of one lithium atom for every six carbon atoms resulting in a maximum theoretical specific capacity of 372 mAh/g in a lithium-ion battery, with a practical capacity that is somewhat lower (ca. 340 to 360 mAh/g). However, there is growing interest in the use of silicon as an alternative to graphite because of its very high capacity for lithium. Silicon has a theoretical maximum specific capacity of about 3,600 mAh/g in a lithium-ion battery (based on Li₁₅Si₄). However, the implementation of silicon in lithium ion batteries is impeded by significant expansion of silicon upon lithium insertion. This results in significant mechanical stress leading to fracturing and structural failure. In addition, the solid electrolyte interphase (SEI) layer that forms on exposed silicon surfaces during the initial charge is unstable because the expansion and contraction of a silicon anode results in fracturing and delamination of the SEI layer and the exposure of fresh silicon surface. Further SEI formation on exposed surfaces results in further electrolyte decomposition and irreversible consumption of lithium. These failure mechanisms collectively result in an unacceptable loss of electrochemical capacity over successive charging and discharging cycles.

The present inventors have previously reported the development of a class of electroactive materials having a composite structure in which electroactive materials, such as silicon, are deposited into the pore network of highly porous particles, e.g. a porous carbon material, having a carefully controlled pore size distribution. In WO 2020/095067 and WO 2020/128495 disclose a class of composite particles in which improved electrochemical performance can be attributed to the microstructure of the particles. The electroactive materials form small domains with dimensions of the order of a few nanometres or less within the pore network of the porous particles, which thus function as a framework for the composite particles. The fine electroactive structures are thought to have a lower resistance to elastic deformation and higher fracture resistance than larger electroactive structures and are therefore able to lithiate and delithiate without excessive structural stress. As a result, the electroactive materials exhibit good reversible capacity retention over multiple charge-discharge cycles. Secondly, by controlling the loading of silicon within the porous carbon framework such that only part of the pore volume is occupied by silicon in the uncharged state, the unoccupied pore volume of the porous carbon framework is able to accommodate a substantial amount of silicon expansion internally. Excessive expansion is constrained by the particle framework. Furthermore, only a small area of the electroactive material surface is accessible to electrolyte and so SEI formation is substantially prevented.

Exposed silicon surfaces are highly reactive and rapidly form a native oxide layer when exposed to air or moisture. In the case that silicon is deposited into the pore structure of highly porous particles by thermal decomposition of a silicon-containing precursor compound (such as silane, SiH₄), the silicon surfaces are terminated by Si-H bonds which undergo rapid reaction with atmospheric oxygen and/or moisture to form silicon oxides with the generation of hydrogen gas (H₂ gas) as a by-product. Uncontrolled reaction of the silicon surfaces results in composite particles with excessive oxidation and impaired electrochemical performance.

The applicant has therefore developed various techniques for passivation of silicon-containing composite particles to reduce surface activity while maintaining advantageous electrochemical properties, including initial capacity and capacity retention over multiple-charge-discharge cycles. For example, WO 2022/029422 describes passivation of silicon surfaces using controlled air oxidation and/or passivation with a range of chemical agents that are able to react with the silicon surface to prevent further oxidation. First cycle efficiency is a critical parameter for lithium ion batteries. In the case that the silicon is extensively oxidised, the silicon oxides will react with lithium during the first charging cycle to form lithium silicates which prevent the release of lithium in subsequent discharge. Irreversible consumption of lithium via this mechanism reduces the capacity of the battery in subsequent discharge cycles and therefore control of silicon oxidation is of critical importance.

It has now been found that even these passivated particles retain a low level of surface reactivity and that hydrogen gas is evolved during storage through reaction with atmospheric moisture. Hydrogen gas may also be evolved during electrode manufacture when the composite particles are combined with additives, such as binders and conductive additives, in aqueous slurries before being coated onto current collectors. Without being bound by theory, it is believed that hydrogen generation is caused by diffusion of water into the composite particles and through the passivation layer on the silicon surfaces, whereupon it reacts with internal silicon to form silicon oxides and evolve hydrogen gas as a by-product. The problem is magnified in the case of electroactive materials as described above, since the silicon domain size is extremely small and therefore more silicon surface is potentially accessible by diffusion of water into the composite particles.

The evolution of hydrogen gas can create a significant hazard when electrodes are produced on a manufacturing scale whereas much of the research into silicon-based electrodes to date has been carried out on a laboratory scale. As silicon-based electroactive materials move toward full commercialization, there is a need to address the problem of hydrogen evolution to meet the safety standards required in full-scale manufacturing. Furthermore, excess hydrogen gas generation can have a deleterious effect on manufacture of electrode coatings, particularly when aqueous binders are used. Hydrogen gas formed during production of the electrode slurry can cause foaming and increased viscosity of the slurry leading to the formation of poor quality coatings when the slurry is cast onto the current collector. References herein to the evolution of hydrogen gas shall be understood to mean H₂ gas.

### SUMMARY OF THE INVENTION

In a first aspect, the invention provides a process for preparing composite particles, the process comprising the steps of:
(a) providing a plurality of porous particles comprising micropores and/or mesopores, wherein the total pore volume of micropores and mesopores as measured by nitrogen gas adsorption is in the range from 0.4 to 2.2 cm³/g;
(b) contacting the porous particles with a silicon-containing precursor at a temperature and pressure effective to cause deposition of silicon in the pores of the porous particles to form silicon-containing composite particles;
(c) optionally contacting the silicon-containing composite particles from step (b) with a passivating agent; and
(d) contacting the silicon-containing composite particles from step (b) or step (c) with liquid water or a gas comprising water vapour, wherein said contacting is carried out at a temperature of at least 30 °C.

The invention therefore relates in general terms to a process for preparing composite particles in which thermal decomposition of a silicon-containing precursor material is used to deposit a plurality of nanoscale silicon domains into the pore network of porous particles comprising micropores and mesopores. This type of deposition process is termed chemical vapour infiltration (CVI). The composite particles produced according to the process of the invention therefore comprise a first component in the form of porous particle framework that is derived from the porous particles provided in step (a), and a second component in the form of a plurality of nanoscale silicon domains that are deposited within the pore structure of the porous particle framework in step (b). As used herein, the term "nanoscale silicon domain" refers to a nanoscale body of silicon having maximum dimensions that are determined by the location of the silicon within the micropores and/or mesopores of the porous particles.

The process of the invention builds upon prior disclosures by the applicant by the use of step (d), in which composite particles formed by a CVI process are subjected to a stabilisation treatment using liquid water or water vapour at elevated temperature. It has now been identified that the process of the invention provides an effective solution to the problem of hydrogen evolution from composite particles comprising nanoscale silicon domains within a conductive particle framework. Without being bound by theory, it is believed that water molecules from the liquid water or water vapour used in step (d) diffuse into the composite particle structure and react with residual reactive sites at silicon surfaces to form silicon oxides with the evolution of hydrogen gas as a by-product. It is thought that these active sites are primarily in the form of hydride-terminated silicon at the surfaces of the silicon nanostructures. The process of the invention therefore essentially ensures that reaction of these residual reactive sites is carried out under controlled conditions during particle manufacture instead of occurring under uncontrolled conditions during downstream processing of the composite particles to form electrodes.

It is furthermore understood that the passivated silicon surfaces of the composite particles prepared according to the process of the invention impede subsequent access of water (e.g. atmospheric moisture or the water used to form slurries during electrode manufacture) to the underlying silicon more effectively than known passivated materials. Accordingly, hydrogen evolution over time from the composite particles formed according to the process of the invention is significantly reduced as compared to known composite particles.

A further advantage is that the process of the invention achieves a reduction in the hydrogen evolution (i.e. H₂ gas evolution) without any significant increase in the silicon oxide content of the composite particles. As set out above, a low oxygen content of the composite particles is necessary to maintain high first cycle efficiency.

The process also enables an optional functional coating or shell to be subsequently applied to the external surfaces of the composite particles, fully or partially covering the passivated silicon surfaces such that any diffusion of water through the functional coating or shell during handling, storage and/or use will be impeded from further inward diffusion by the passivated silicon surfaces of the invention, maintaining the chemical stability of the composite particles. A functional coating or shell is a coating or shell that improves the function of the composite particles, for example by improving electronic and/or ionic conductivity, improving the structural strength or robustness of the particles, or enhancing the chemical compatibility of the surface of the composite particles with other components in an electrode, an electrode composition or electrode slurry.

In a second aspect, the invention provides composite particles that are obtainable by the process of the first aspect.

In a third aspect, the invention provides composite particles comprising a porous particle framework and silicon, wherein:
(a) the porous particle framework comprises micropores and/or mesopores, wherein the total pore volume of micropores and mesopores as measured by nitrogen gas adsorption is in the range from 0.4 to 2.2 cm³/g;
(b) the silicon is located within the micropores and/or mesopores of the porous particle framework;
wherein the composite particles have a 7-day hydrogen activity in water of less than 40 µmol·per gram of silicon.

As used herein, the 7-day hydrogen activity of the composite particles represents the cumulative hydrogen evolution (as H₂ gas) that is observed when 0.5 g of composite particles are stored in 10 g of deionised water for 7 days (168 hours) at 25 °C as quantified according to the measuring method defined below. The invention provides in particular a composition consisting of the composite particles of the third aspect.

In a fourth aspect, the invention provides a process for preparing an electrode, the process comprising the steps of:
(a) combining the composite particles of the second or third aspect with an aqueous liquid and at least one binder;
(b) casting the slurry onto a current collector;
(c) drying the cast slurry to form a coating layer on the current collector.

### DETAILED DESCRIPTION OF THE INVENTION

The process of the first aspect of the invention comprises the steps of:
(a) providing a plurality of porous particles comprising micropores and/or mesopores, wherein the total pore volume of micropores and mesopores as measured by nitrogen gas adsorption is in the range from 0.4 to 2.2 cm³/g;
(b) contacting the porous particles with a silicon-containing precursor at a temperature and pressure effective to cause deposition of silicon in the pores of the porous particles to form silicon-containing composite particles;
(c) optionally contacting the silicon-containing composite particles from step (b) with a passivating agent; and
(d) contacting the silicon-containing composite particles from step (b) or step (c) with liquid water or a gas comprising water vapour, wherein said contacting is carried out at a temperature of at least 30 °C.

The porous particles function as a framework for the silicon which is deposited in the form of a plurality of silicon domains that extend throughout the pore volume of the porous particles. Due to the dimensions of micropores and mesopores, the silicon domains generally have maximum dimensions in any direction of less than 50 nm, and usually significantly less than 50 nm. A domain may for example take the form of a regular or irregular particle or a bounded layer or region of coating.

The process of the invention differs from known CVI process through the use of a water contacting step (step (d)) to react with residual active sites at silicon surfaces and to minimise hydrogen evolution when the composite particles are exposed to moisture during storage or downstream processing.

Step (d) is carried out at a temperature of at least 30 °C. More preferably, the temperature in step (d) is at least 40 °C, more preferably at least 50 °C, more preferably at least 60 °C, more preferably at least 80 °C, more preferably at least 100 °C, more preferably at least 120 °C, more preferably at least 140 °C, more preferably at least 160 °C, more preferably at least 180 °C, more preferably at least 200 °C, more preferably at least 220 °C, more preferably at least 240 °C. As the temperature is increased above 50 °C, the rate of diffusion of water into the composite particles is increased so that complete reaction may be achieved in a shorter period of time.

If the conditions in step (d) are too aggressive then excessive oxidation of silicon may occur, which results in a loss of electrochemical capacity. Accordingly, to keep the oxide content of the composite particles within the desirable range of less than 4 wt%, the temperature in step (d) is preferably no more than 400 °C, more preferably no more than 380 °C, more preferably no more than 360 °C, more preferably no more than 350 °C, more preferably no more than 340 °C, more preferably no more than 320 °C, more preferably no more than 300 °C, more preferably no more than 280 °C.

For example, the the temperature in step (d) is preferably in the range from 40 to 400°°C, more preferably from 100 to 350°°C, more preferably from 120 to 300°°C, more preferably from 140 to 280°°C.

Preferably the process of the invention is controlled such that the silicon nanoscale domains of the composite particles comprise amorphous silicon that is substantially non-crystalline.

Preferably, the composite particles obtained from step (d) have a total oxygen content of less than 6 wt%, or less than 5 wt%, or less than 4.5 wt%, or less than 4 wt%, or less than 3.5 wt%, or less than 3.2 wt%, or less than 3 wt%, or less than 2 wt%, or less than 1 wt%, or less than 0.5 wt% based on the total mass of the composite particles.

The water used in step (d) may be in the form of liquid water or water vapour. Below the boiling point of water, the water may be liquid or it may be water vapour in the form of a humidified gas. Above, the boiling point of water, the water is in the form of water vapour. The use of water vapour may be preferred in view of faster diffusion and the possibility to use higher temperatures.

When water vapour is used in step (d), it is preferably used in admixture with a carrier gas, such that the carrier gas comprises from 1 mol% to 60 mol% water vapour, or from 2 mol% to 55 mol% water vapour, or from 3 mol% to 50 mol% water vapour, or from 4 mol% to 45 mol% water vapour, or from 5 mol% to 40 mol% water vapour, or from 8 mol% to 35 mol% water vapour, or from 10 mol% to 30 mol% water vapour, or from 12 mol% to 25 mol% water vapour, or from 15 mol% to 20 mol% water vapour. A suitable carrier gas is air. The average molar mass of air (approx. 78% nitrogen, N₂; 21% oxygen, O₂; 1% other gases) is taken to be 28.57 g/mol.

In the case that water vapour is used in step (d), the pressure in step (d) is suitably in the range from 5 to 5000 kPa, or from 10 to 2000 kPa, or from 20 to 1000 kPa, or from 50 to 500 kPa, or from 80 to 200 kPa, or from 90 to 150 kPa, or from 95 to 120 kPa, or about 100 kPa.

When water vapour is used in step (d), the total duration of contacting in step (d) may be in the range from 1 to 600 minutes, for example from 2 to 300 minutes, or from 5 to 240 minutes, or from 10 to 180 minutes, or from 15 to 120 minutes, or from 20 to 100 minutes, or from 25 to 80 minutes, or from 30 to 60 minutes.

Optionally when water vapour is used in step (d), step (d) may be carried out in a phased manner, such that the composite particles are initially contacted with a gas comprising a low content of water vapour, for an initial contacting phase and then the content of water vapour is increased for a subsequent contacting phase. This ensures a controlled rate of reaction during the initial phase while the composite particles contain a higher density of reactive sites. As the density of reactive sites reduces, the content of water vapour may be increased to facilitate completion of the reaction. For example, step (d) may comprise an initial phase during which the gas comprises from 1 mol% to less than 10 mol% water vapour and at least one subsequent phase during which the water vapour content of the gas in increased to 10% mol% to 60 mol%. Each phase may independently have a duration from 1 to 60 minutes. Optionally, there may be up to 10 phases in which the water vapour content of the gas in each phase is increased relative to the preceding phase.

In the case that the carrier gas comprises oxygen, then oxidative passivation of the silicon surfaces by oxygen may be carried out concurrently with the reaction with water in step (d).

When liquid water is used in step (d), the temperature in step (d) is preferably in the range from 30 to 150 °C, more preferably in the range from 30 to 99.5 °C, more preferably in the range from 40 to 99 °C, more preferably in the range from 50 to 98 °C, more preferably in the range from 60 to 97 °C, more preferably in the range from 70 to 96 °C, more preferably in the range from 80 to 95 °C. It will be appreciated that temperatures in excess of 100 °C may be used provided that the reaction vessel is pressurized to a sufficient pressure to prevent boiling of the water. In some embodiments, temperatures up to 350 °C, or up to 300 °C may be used, and pressures up to 10,000 kPa.

When liquid water is used in step (d), the pressure in step (d) is suitably in the range from 1 to 1,000 kPa, or from 1 to 500 kPa, or from 50 to 200 kPa, or from 80 to 150 kPa, or from 90 to 120 kPa, or about 100 kPa.

When liquid water is used in step (d), the silicon-containing composite particles and water may be in the form of an aqueous suspension (slurry) comprising greater than 60 wt% water, or greater than 80 wt% water. Alternatively, the silicon-containing composite particles and water may be in the form of a moistened cake comprising from 2 to 60 wt% water (for example 10 to 60 wt% water or 20 to 50 wt% water) based on the total amount of water and silicon-containing composite particles. Suitably a moistened cake may be obtained by forming a slurry with excess water followed by removal of the excess water by filtration.

When liquid water is used in step (d), the total duration of contacting in step (d) may be in the range from 5 minutes to 24 hours, or from 10 minutes to 12 hours, or from 15 minutes to 6 hours, or from 20 minutes to 5 hours, or from 25 minutes to 3 hours, or from 30 minutes to 2 hours.

Preferably, step (d) comprises contacting the silicon-containing composite particles from step (b) or step (c) with liquid water at a temperature in the range from 60 to 120 °C, wherein the composite particles and liquid water are in the form of a slurry comprising greater than 60 wt% water. Preferably, the duration of contacting is from 30 minutes to 6 hours. Optionally, the composite particles and liquid water are agitated during step (d).

The contacting of the silicon-containing composite particles and liquid water in step (d) is preferably carried out in a closed vessel. A closed vessel prevents the loss of water to the atmosphere such that the specified weight ratio of composite particles to water is maintained throughout step (d).

In the cases that the silicon-containing composite particles are contacted with liquid water in step (d), the liquid water may comprise one or more additives.

Suitable additives include polymers, such as polyacrylic acid (PAA), polyvinyl acetate (PVA), polyvinyl pyrrolidone (PVP), polystyrene sulphonate (PSS), polyethylene glycol (PEG), poly(3,4-ethylenedioxythiophene) (PEDOT) or a combination thereof. A preferred polymer additive comprises a mixture of PAA and PVA.

Suitable additives may also include dyes such as anionic and cationic dyes, xanthene dyes, indigo dyes, phthalocyanine dyes, anthraquinone dyes, azo dyes, nitro dyes, arylmethane dyes, nitroso dyes, nitro dyes, reactive dyes, vat dyes, direct dyes, disperse dyes and sulfur dyes.

It is believed that these polymers or dyes can adsorb onto the surfaces of the composite particles and thereby provide a barrier to subsequent oxidation of the silicon.

Other suitable additives include organic acids, such as gallic acid, oxalic acid, acetic acid, lactic acid, tartaric acid, citric acid and ascorbic acid.

Other additives may include sugars such as glucose, dextrose, sucrose or fructose.

The liquid water may comprise one or more of the above additives and such additives may be added at different times of step (d).

The pH value may be controlled during the contacting with liquid water. Preferably the pH is neutral or acidic. The pH value may be controlled during step (d) such that it is less than 7, or less than 5, or less than 3.

In the case that step (d) comprises contacting the silicon-containing composite particles with liquid water, the composite particles are preferably dried following step (d). In a general sense, any method of removing liquid water may be used. However, in general, water is removed by a combination of filtration and evaporation. Filtration is effective to substantially remove any free water. However, the composite particles generally still comprise a substantial amount of water adsorbed onto surfaces and infiltrated into pores. This water is preferably removed by evaporation using elevated temperatures (e.g. ≥50 °C), optionally in combination with reduced pressure (e.g. ≤80 kPa).

Drying is preferably carried out using a combination of elevated temperature and reduced pressure, preferably a temperature of at least 50 °C and a pressure of no more than 50 kPa, more preferably no more than 10 kPa.

Drying is preferably carried out under conditions in which the drying temperature is increased as the residual water content of the composite particles reduces. For example, the drying temperature may be initially in the range from 50 to 80 °C and may be increased to a temperature in the range from greater than 80 to 150 °C. The temperature may increase continuously throughout the period of drying. Alternatively, the temperature profile may comprise one or more fixed drying temperatures at which the composite particles are held for a period of time, for example at least 20 minutes. For example, the composite particles may be held for at least 20 minutes at a first drying temperature in the range from 50 to 80 °C and subsequently heated to a second drying temperature in the range from greater than 80 to 150 °C and held at the second drying temperature for at least 20 minutes.

In a preferred method of drying, the composite particles are heated to a first drying temperature in the range from 50 to 80 °C and held at that temperature until the water content of the composite particles is less than 3% w/w, then heated to a second drying temperature in the range from 120 to 150 °C and held at that temperature until the water content of the composite particles is less than 0.5% w/w.

The dried composite particles preferably comprise less than 1 wt% water, more preferably less than 0.5 wt% water, or less than 0.3 wt% water.

Optionally, drying is carried out using spray drying. Alternatively, a kiln, ring dryer, mill drying or microwave heating may be used.

In other embodiments, the contacting of the silicon-containing composite particles in step (d) may be carried out in an open vessel. In particular, in the case that the silicon-containing composite particles and water are in the form of a moistened cake, the contacting in step (d) may be carried out in an open vessel such that evaporation of water results in a dry powder at the end of step (d).

As defined herein, an open vessel refers to any container which allows from the separation of water from the composite particles to provide a dry powder, for example a vessel which is directly open to the atmosphere or a vessel which is operated under a gas flow such that water vapour may be removed in an effluent gas stream.

As defined herein, a dry powder preferably comprises less than 1 wt% water, more preferably less than 0.5 wt% water.

The porous particles used in step (a) generally comprise a three-dimensionally interconnected open pore network comprising micropores and/or mesopores and optionally a minor volume of macropores. In accordance with conventional IUPAC terminology, the term "micropore" is used herein to refer to pores of less than 2 nm in diameter, the term "mesopore" is used herein to refer to pores of 2-50 nm in diameter, and the term "macropore" is used to refer to pores of greater than 50 nm diameter.

References herein to the volume of micropores, mesopores and macropores in the porous particles, and also any references to the distribution of pore volume within the porous particles, relate to the internal pore volume of the porous particles used as the starting material in step (a) of the claimed process, i.e. prior to deposition of silicon into the pore volume in step (b).

The porous particles used in step (a) may be characterised by the total volume of micropores and mesopores (i.e. the total pore volume in the pore diameter range from 0 to 50 nm). Typically, the porous particles include both micropores and mesopores. However, it is not excluded that porous particles may be used which include micropores and no mesopores, or mesopores and no micropores.

The total volume of micropores and mesopores in the porous particles used in step (a) is preferably at least 0.45 cm³/g, or at least 0.5 cm³/g, or at least 0.55 cm³/g, or at least 0.6 cm³/g, or at least 0.65 cm³/g, or at least 0.7 cm³/g, or at least 0.75 cm³/g. The use of higher porosity particles may be advantageous since it allows a larger amount of silicon to be accommodated within the pore volume.

The internal pore volume of the porous particles used in step (a) is suitably capped at a value at which increasing fragility of the particles structure outweighs the advantage of increased pore volume accommodating a larger amount of silicon.

Preferably, the total volume of micropores and mesopores in the porous particles used in step (a) is no more than 2.0 cm³/g, or no more than 1.8 cm³/g, or no more than 1.7 cm³/g, or no more than 1.6 cm³/g, or no more than 1.55 cm³/g, or no more than 1.5 cm³/g, or no more than 1.45 cm³/g, or no more than 1.4 cm³/g, or no more than 1.35 cm³/g, or no more than 1.3 cm³/g, or no more than 1.25 cm³/g, or no more than 1.2 cm³/g, or no more than 1.15 cm³/g, or no more than 1.1 cm³/g.

For example, the total volume of micropores and mesopores in the porous particles used in step (a) may be in the range from 0.45 to 2 cm³/g, or from 0.5 to 1.8 cm³/g, or from 0.55 to 1.6 cm³/g, or from 0.6 to 1.5 cm³/g, or from 0.65 to 1.4 cm³/g, or from 0.7 to 1.3 cm³/g, or from 0.75 to 1.2. cm³/g.

The general term "PDₙ pore diameter" refers herein to the volume-based nth percentile pore diameter, based on the total volume of micropores and mesopores in the porous particles. For instance, the term "PD₅₀ pore diameter" as used herein refers to the pore diameter below which 50% of the total micropore and mesopore volume is found. For the avoidance of doubt, any macropore volume (pore diameter greater than 50 nm) is not taken into account for the purpose of determining PDₙ values.

The PD₅₀ pore diameter of the porous particles used in step (a) is preferably no more than 10 nm, or no more than 8 nm, or no more than 6 nm, or no more than 5 nm, or no more than 4 nm, or no more than 3 nm, or no more than 2.5 nm, or no more than 2 nm, or no more than 1.9 nm, or no more than 1.8 nm, or no more than 1.7 nm, or no more than 1.6 nm.

The PD₉₀ pore diameter of the porous particles used in step (a) is preferably no more than 20 nm, or no more than 15 nm, or no more than 12 nm, or no more than 10 nm, or no more than 8 nm, or no more than 6 nm, or no more than 5 nm. Preferably, the PD₉₀ pore diameter of the porous particles is at least 3.2 nm, or at least 3.5 nm, or at least 3.8 nm, or at least 4 nm. For example, the PD₉₀ pore diameter of the porous particles is preferably in the range from 3.2 to 20 nm, or from 3.5 to 15 nm, or from 3.8 to 10 nm, or from 4 to 8 nm.

The micropore volume fraction of the porous particles used in step (a) is preferably at least 0.4, or at least 0.45, or at least 0.5, or at least 0.55, or at least 0.6, based on the total volume of micropores and mesopores in the porous particles.

The micropore volume fraction of the porous particles used in step (a) is preferably no more than 0.85, or no more than 0.8, or no more than 0.75, or no more than 0.7, based on the total volume of micropores and mesopores in the porous particles.

For example, the micropore volume fraction may be in the range from 0.4 to 0.85, or in the range from 0.45 to 0.85, or in the range from 0.5 to 0.8, or in the range from 0.55 to 0.75, or in the range from 0.6 to 0.7, based on the total volume of micropores and mesopores in the porous particles,

The pore diameter distribution of the porous particles used in step (a) may be monomodal, bimodal or multimodal. As used herein, the term "pore diameter distribution" relates to the distribution of pore diameter relative to the cumulative total internal pore volume of the porous particles. A bimodal or multimodal pore diameter distribution may be preferred since close proximity between micropores and pores of larger diameter provides the advantage of efficient ionic transport through the porous network to the silicon.

The total volume of micropores and mesopores and the pore diameter distribution of micropores and mesopores are determined using nitrogen gas adsorption at 77 K down to a relative pressure p/p₀ of 0.8×10⁻⁶ using quenched solid density functional theory (QSDFT) in accordance with standard methodology as set out in ISO 15901-2 and ISO 15901-3. Nitrogen gas adsorption is a technique that characterizes the porosity and pore diameter distributions of a material by allowing a gas to condense in the pores of a solid. As pressure increases, the gas condenses first in the pores of smallest diameter and the pressure is increased until a saturation point is reached at which all of the pores are filled with liquid. The nitrogen gas pressure is then reduced incrementally, to allow the liquid to evaporate from the system. Analysis of the adsorption and desorption isotherms, and the hysteresis between them, allows the pore volume and pore diameter distribution to be determined. Suitable instruments for the measurement of pore volume and pore diameter distributions by nitrogen gas adsorption include the ASAP 2020 Plus porosity analyzer, which is available from Micromeritics Instrument Corporation, USA, and the Autosorb IQ porosity analyzers, which are available from Quantachrome Instruments.

Nitrogen gas adsorption is effective for the measurement of pore volume and pore diameter distributions for pores having a diameter up to 50 nm, but is less reliable for pores of much larger diameter. For the purposes of the present invention, nitrogen adsorption is therefore used to determine pore volumes and pore diameter distributions only for pores having a diameter up to and including 50 nm (i.e. only for micropores and mesopores). PDₙ values are likewise determined relative to the total volume of micropores and mesopores only.

In view of the limitations of available analytical techniques it is not possible to measure pore volumes and pore diameter distributions across the entire range of micropores, mesopores and macropores using a single technique. In the case that the porous particles comprise macropores, the volume of pores having diameter in the range from greater than 50 nm and up to 100 nm may be measured by mercury porosimetry and is preferably no more than 0.3 cm³/g, or no more than 0.2 cm³/g, or no more than 0.1 cm³/g, or no more than 0.05 cm³/g. A small fraction of macropores may be useful to facilitate electrolyte access into the pore network, but the advantages of the invention are obtained substantially by accommodating silicon in micropores and smaller mesopores.

Any pore volume measured by mercury porosimetry at pore diameters of 50 nm or below is disregarded (as set out above, nitrogen adsorption is used to characterize the mesopores and micropores). Pore volume measured by mercury porosimetry above 100 nm is assumed for the purposes of the invention to be inter-particle porosity and is also disregarded.

Mercury porosimetry is a technique that characterizes the porosity and pore diameter distributions of a material by applying varying levels of pressure to a sample of the material immersed in mercury. The pressure required to intrude mercury into the pores of the sample is inversely proportional to the size of the pores. Values obtained by mercury porosimetry as reported herein are obtained in accordance with ASTM UOP578-11, with the surface tension γ taken to be 480 mN/m and the contact angle φ taken to be 140° for mercury at room temperature. The density of mercury is taken to be 13.5462 g/cm³ at room temperature. A number of high precision mercury porosimetry instruments are commercially available, such as the AutoPore IV series of automated mercury porosimeters available from Micromeritics Instrument Corporation, USA. For a complete review of mercury porosimetry reference may be made to P.A. Webb and C. Orr in "Analytical Methods in Fine Particle Technology, 1997, Micromeritics Instrument Corporation, ISBN 0-9656783-0.

It will be appreciated that intrusion techniques such as gas adsorption and mercury porosimetry are effective only to determine the pore volume of pores that are accessible to nitrogen or to mercury from the exterior of the porous particles. Porosity values specified herein shall be understood as referring to the volume of open pores, i.e. pores that are accessible to a fluid from the exterior of the porous particles. Fully enclosed pores which cannot be identified by nitrogen adsorption or mercury porosimetry shall not be taken into account herein when determining porosity values. Likewise, any pore volume located in pores that are so small as to be below the limit of detection by nitrogen adsorption is not taken into account.

The porous particles preferably have a BET surface area of at least 500 m²/g, or at least 750 m²/g, or at least 1,000 m²/g, or at least 1,250 m²/g, or at least 1,500 m²/g. The term "BET surface area" as used herein should be taken to refer to the surface area per unit mass calculated from a measurement of the physical adsorption of gas molecules on a solid surface, using the Brunauer-Emmett-Teller theory, in accordance with ISO 9277:2022. Preferably, the BET surface area of the porous particles is no more than 4,000 m²/g, or no more than 3,500 m²/g, or no more than 3,250 m²/g, or no more than 3,000 m²/g or no more than 2,500 m²/g, or no more than 2,000 m²/g. For example, the porous particles may have a BET surface area in the range from 500 m²/g to 4,000 m²/g, or from 750 m²/g to 3,500 m²/g, or from 1,000 m²/g to 3,250 m²/g, or from 1,000 m²/g to 3,000 m²/g, or from 1,000 m²/g to 2,500 m²/g, or from 1,000 m²/g to 2,000 m²/g.

The porous particles preferably have a particle density of at least 0.35 and preferably less than 3 g/cm³, more preferably less than 2 g/cm³, more preferably less than 1.5 g/cm³, most preferably from 0.35 to 1.2 g/cm³. As used herein, the term "particle density" refers to "apparent particle density" as measured by mercury porosimetry (i.e. the mass of a particle divided by the particle volume wherein the particle volume is taken to be the sum of the volume of solid material and any closed or blind pores (a "blind pore" is pore that is too small to be measured by mercury porosimetry). Preferably, the porous particles have particle density of at least 0.4 g/cm³, or at least 0.45 g/cm³, or at least 0.5 g/cm³, or at least 0.55 g/cm³, or at least 0.6 g/cm³, or at least 0.65 g/cm³, or at least 0.7 g/cm³. Preferably, the porous particles have particle density of no more than 1.15 g/cm³, or no more than 1.1 g/cm³, or no more than 1.05 g/cm³, or no more than 1 g/cm³, or no more than 0.95 g/cm³, or no more than 0.9 g/cm³.

The porous particles preferably have a tap density of at least 0.3 g/cm³, or at least 0.35 g/cm³ or at least 0.4 g/cm³, or at least 0.5 g/cm³.

Preferably, the D₁₀ particle diameter of the porous particles is at least 0.8 µm, or at least 1.0 µm, or at least 1.2 µm, or at least 1.4 µm, or at least 1.5 µm, or at least 1.6 µm, or at least 1.8 µm, or at least 2.0 µm, or at least 2.2 µm, or at least 2.4 µm, or at least 2.5 µm, or at least 2.6 µm, or at least 2.8 µm, or at least 3.0 µm.

Preferably, the porous particles have a D₅₀ particle diameter in the range from 1 to 20 µm. Preferably, the D₅₀ particle diameter of the porous particles is at least 1.5 µm, or at least 2 µm, or at least 2.5 µm, or at least 3 µm. Preferably, the D₅₀ particle diameter of the porous particles is no more than 18 µm, or no more than 15 µm, or no more than 12 µm, or no more than 10 µm, or no more than 8 µm. For example, the D₅₀ particle diameter of the porous particles may be in the range from 1.5 to 18 µm, or in the range from 1.5 to 15 µm, or in the range from 2 to 12 µm, or in the range from 2 to 10 µm, or in the range from 2.5 to 8 µm, or in the range from 3 to 8 µm.

The D₉₀ particle diameter of the porous particles is preferably no more than 30 µm, or no more than 25 µm, or no more than 20 µm, or no more than 18 µm, or no more than 15 µm.

Preferably, the D₁ particle diameter of the porous particles is at least 0.1 µm, or at least 0.25 µm, or at least 0.5 µm. Preferably, the D₉₉ particle diameter of the porous particles is no more than 50 µm, or no more than 40 µm, or no more than 30 µm.

The deposition of silicon into porous particles that are excessively large may be less efficient due to the longer distance that precursor molecules must diffuse through the pore structure to reach the innermost pores. Deposition of silicon into pores nearer to the particle surface can obstruct access of the precursor molecules to the innermost pores, resulting in particles that are underfilled and thus non-homogenous deposition of the silicon between particles of different sizes. Outsize particles also pack less efficiently and therefore obstruct the formation of electrode layers of homogenous structure and composition.

The porous particles preferably have a narrow particle size distribution span. For instance, the particle size distribution span (defined as (D₉₀-D₁₀)/D₅₀) is preferably 3 or less, more preferably 2 or less, and most preferably 1.5 or less. By maintaining a narrow particle size distribution span, efficient packing of the particles into dense powder beds is more readily achievable.

The particle diameter distribution of the porous particles may be monomodal, bimodal or multimodal.

The term "particle diameter" as used herein refers to the equivalent spherical diameter (esd), i.e. the diameter of a sphere having the same volume as a given particle, wherein the particle volume is understood to include the volume of any intra-particle pores. The terms "Dₙ" and "Dₙ particle diameter" as used herein refer to the nth percentile volume-based median particle diameter, i.e. the diameter below which n% by volume of the particle population is found. For instance, the terms "D₅₀" and "D₅₀ particle diameter" as used herein refer to the volume-based median particle diameter, i.e. the diameter below which 50% by volume of the particle population is found.

Particle diameters and particle diameter distributions can be determined by standard laser diffraction techniques in accordance with ISO 13320:2009. Laser diffraction relies on the principle that a particle will scatter light at an angle that varies depending on the size the particle and a collection of particles will produce a pattern of scattered light defined by intensity and angle that can be correlated to a particle diameter distribution. A number of laser diffraction instruments are commercially available for the rapid and reliable determination of particle diameter distributions. Unless stated otherwise, particle diameter distribution measurements as specified or reported herein are as measured by the conventional Malvern Mastersizer^{TM} 3000 particle size analyzer from Malvern Instruments^{TM}. The Malvern Mastersizer^{TM} 3000 particle size analyzer operates by projecting a helium-neon gas laser beam through a transparent cell containing the particles of interest suspended in an aqueous solution. Light rays which strike the particles are scattered through angles which are inversely proportional to the particle size and a photodetector array measures the intensity of light at several predetermined angles and the measured intensities at different angles are processed by a computer using standard theoretical principles to determine the particle diameter distribution. Laser diffraction values as reported herein are obtained using a wet dispersion of the particles in 2-propanol with a 5 vol% addition of the surfactant SPAN^{TM}-40 (sorbitan monopalmitate). The particle refractive index is taken to be 2.68 for porous particles and 3.50 for composite particles and the dispersant index is taken to be 1.378. Particle diameter distributions are calculated using the Mie scattering model.

Preferably the porous particles have:
(i) a total pore volume of micropores and mesopores as measured by nitrogen gas adsorption in the range from 0.4 to 1.8 cm³/g;
(ii) a PD₅₀ pore diameter of no more than 10 nm, and preferably a PD₉₀ pore diameter of no more than 20 nm; and
(iii) a D₅₀ particle diameter in the range from 1 to 20 µm.

More preferably the porous particles have:
(i) a total pore volume of micropores and mesopores as measured by nitrogen gas adsorption in the range from 0.5 to 1.6 cm³/g;
(ii) a PD₅₀ pore diameter of no more than 8 nm, and preferably a PD₉₀ pore diameter of no more than 15 nm; and
(iii) a D₅₀ particle diameter in the range from 1 to 18 µm.

More preferably the porous particles have:
(i) a total pore volume of micropores and mesopores as measured by nitrogen gas adsorption in the range from 0.6 to 1.5 cm³/g;
(ii) a PD₅₀ pore diameter of no more than 6 nm, and preferably a PD₉₀ pore diameter of no more than 12 nm; and
(iii) a D₅₀ particle diameter in the range from 1.5 to 15 µm.

More preferably the porous particles have:
(i) a total pore volume of micropores and mesopores as measured by nitrogen gas adsorption in the range from 0.65 to 1.4 cm³/g;
(ii) a PD₅₀ pore diameter of no more than 2.5 nm, and preferably a PD₉₀ pore diameter of no more than 10 nm; and
(iii) a D₅₀ particle diameter in the range from 1.5 to 12 µm.

More preferably the porous particles have:
(i) a total pore volume of micropores and mesopores as measured by nitrogen gas adsorption in the range from 0.7 to 1.3 cm³/g;
(ii) a PD₅₀ pore diameter of no more than 4 nm, and preferably a PD₉₀ pore diameter of no more than 8 nm; and
(iii) a D₅₀ particle diameter in the range from 2 to 10 µm.

More preferably the porous particles have:
(i) a total pore volume of micropores and mesopores as measured by nitrogen gas adsorption in the range from 0.75 to 1.2 cm³/g;
(ii) a PD₅₀ pore diameter of no more than 3 nm, and preferably a PD₉₀ pore diameter of no more than 6 nm;
(iii) a D₅₀ particle diameter in the range from 2 to 10 µm.

More preferably the porous particles have:
(i) a total pore volume of micropores and mesopores as measured by nitrogen gas adsorption in the range from 0.8 to 1.2 cm³/g;
(ii) a PD₅₀ pore diameter of no more than 2 nm, and preferably a PD₉₀ pore diameter of no more than 5 nm;
(iii) a D₅₀ particle diameter in the range from 2.5 to 8 µm.

The porous particles preferably comprise a conductive material. The use of conductive porous particles is advantageous as the porous particles form a conductive framework within the composite particles which facilitates the flow of electrons between lithium atoms/ions inserted into the silicon and a current collector.

A preferred type of conductive porous particles are particles comprising or consisting of a conductive carbon-based material, referred to herein as conductive porous carbon particles.

The conductive porous carbon particles preferably comprise at least 80 wt% carbon, more preferably at least 85 wt% carbon, more preferably at least 90 wt% carbon, more preferably at least 95 wt% carbon, and optionally at least 98wt% or at least 99 wt% carbon. The conductive porous carbon particles preferably have an ash content of no more than 0.5 wt%, more preferably no more than 0.4 wt%, or no more than 0.3 wt%, or no more than 0.2 wt%, or nor more than 0.15 wt%. The carbon may be crystalline carbon or amorphous carbon, or a mixture of amorphous and crystalline carbon. The porous carbon particles may be either hard carbon particles or soft carbon particles.

As used herein, the term "hard carbon" refers to a disordered carbon matrix in which carbon atoms are found predominantly in the sp² hybridised state (trigonal bonds) in nanoscale polyaromatic domains. The polyaromatic domains are cross-linked with a chemical bond, e.g. a C-O-C bond. Due to the chemical cross-linking between the polyaromatic domains, hard carbons cannot be converted to graphite at high temperatures. Hard carbons have graphite-like character as evidenced by the large G-band (~1600 cm⁻¹) in the Raman spectrum. However, the carbon is not fully graphitic as evidenced by the significant D-band (~1350 cm⁻¹) in the Raman spectrum.

As used herein, the term "soft carbon" also refers to a disordered carbon matrix in which carbon atoms are found predominantly in the sp² hybridised state (trigonal bonds) in polyaromatic domains having dimensions in the range from 5 to 200 nm. In contrast to hard carbons, the polyaromatic domains in soft carbons are associated by intermolecular forces but are not cross-linked with a chemical bond. This means that they will graphitise at high temperature. The porous carbon particles preferably comprise at least 50% sp² hybridised carbon as measured by XPS. For example, the porous carbon particles may suitably comprise from 50% to 98% sp² hybridised carbon, from 55% to 95% sp² hybridised carbon, from 60% to 90% sp² hybridised carbon, or from 70% to 85% sp² hybridised carbon.

When the particulate porous frameworks are particulate porous carbon frameworks, the particulate porous carbon frameworks may have a ratio of the relative intensity of D and G peaks (I_{D}/I_{G}) of ≤2.0 or ≤1.8 as measured by Raman spectroscopy. Alternatively, or in addition, I_{D}/I_{G} of the particulate porous carbon frameworks may be ≥0.6, or ≥ 0.8, or ≥1 or ≥1.05. For example, I_{D}/I_{G} of the particulate porous carbon frameworks may be in the range of 0.6-1.8, or 1.0-1.6.

A variety of different materials may be used to prepare suitable porous carbon particles via pyrolysis. Examples of organic materials that may be used include plant biomass including lignocellulosic materials (such as coconut shells, rice husks, hard and soft wood and products derived therefrom, including tree bark and sawdust etc.) and fossil carbon sources such as coal. Examples of resins and polymeric materials which form porous carbon particles on pyrolysis include phenolic resins, novolac resins, pitch, melamines, polyacrylates, polystyrenes, polyvinylalcohol (PVA), polyvinylpyrrolidone (PVP), and various copolymers comprising monomer units of acrylates, styrenes, α-olefins, vinyl pyrrolidone and other ethylenically unsaturated monomers. A variety of different carbon materials are available in the art depending on the starting material and the conditions of the pyrolysis process. Porous carbon particles of various different specifications are available from commercial suppliers.

Porous carbon particles may undergo a chemical or gaseous activation process to increase the volume of mesopores and micropores. A suitable activation process comprises contacting pyrolyzed carbon with one or more of oxygen, steam, CO, CO₂, boric acid, phosphoric acid and KOH at a temperature in the range from 600 to 1000 °C.

Mesopores can also be obtained by known templating processes, using extractable pore formers such as MgO and other colloidal or polymer templates which can be removed by thermal or chemical means post pyrolysis or activation.

Alternatives to carbon-based conductive particles include porous particles comprising titanium nitride (TiN), titanium carbide (TiC), silicon carbide (SiC), nickel oxide (NiOx), titanium silicon nitride (TiSiN), nickel nitride (Ni₃N), molybdenum nitride (MoN), titanium oxynitride (TiOₓN₁₋ₓ), silicon oxide, silicon oxycarbide (SiOC), boron nitride (BN), or vanadium nitride (VN). Preferably the porous particles comprise titanium nitride (TiN), silicon oxycarbide (SiOC) or boron nitride (BN).

The silicon is deposited via a chemical vapor infiltration (CVI) process. As used herein, CVI refers to processes in which a gaseous silicon-containing precursor is thermally decomposed on a surface to form the silicon at the surface and gaseous by-products. The term "gaseous silicon-containing precursor" shall be interpreted herein as referring a molecule that is thermally decomposable to form the silicon and which is in the vapour phase under the conditions of step (b).

The gaseous silicon-containing precursor used in step (b) may be used either in pure form (or substantially pure form) or as a diluted mixture with an inert carrier gas, such as nitrogen or argon. Preferably step (b) comprises contacting the porous particles with a gas comprising at least 30 vol%, or at least 40 vol%, or at least 50 vol%, or at least 60 vol%, or at least 70 vol%, or at least 80 vol%, or at least 90 vol%, or at least 95 vol%, or at least 97 vol%, or at least 99 vol% of the silicon-containing precursor based on the total volume of the gas.

Suitable gaseous silicon-containing precursors include silane (SiH₄), disilane (Si₂H₆), trisilane (Si₃H₈), tetrasilane (Si₄H₁₀), methylsilane (CH₃SiH₃), dimethylsilane ((CH₃)₂SiH₂), or chlorosilanes such as trichlorosilane (HSiCl₃) or methylchlorosilanes such as methyltrichlorosilane (CH₃SiCl₃) or dimethyldichlorosilane ((CH₃)₂SiCl₂). Preferably the silicon-containing precursor is selected from the group consisting of silane (SiH₄), disilane (Si₂H₆), trisilane (Si₃H₈), tetrasilane (Si₄H₁₀). A particularly preferred precursor of silicon is silane.

In the case that the precursor is a chlorinated compound, such as a chlorosilane, the precursor is used in admixture with hydrogen gas, preferably in at least a 1:1 atomic ratio of hydrogen to chlorine.

Optionally, the precursor is free of chlorine. Free of chlorine means that the precursor contains less than 1 wt%, preferably less than 0.1wt%, preferably less than 0.01 wt% of chlorine-containing compounds.

The presence of oxygen in step (b) should be avoided to prevent undesired oxidation of the deposited silicon, in accordance with conventional procedures for working in an inert atmosphere. Preferably, the oxygen content is less than 0.01 vol%, more preferably less than 0.001 vol% based on the total volume of gas used in step (b).

The temperature in step (b) is preferably in the range from 340 to 500 °C, or from 350 to 480 °C, or from 350 to 450 °C, or from 350 to 420 °C, or from 350 to less than 400 °C, or from 355 to 395 °C, or from 360 to 390 °C, or from 365 to 385 °C, or from 370 to 380 °C.

The pressure in step (b) is preferably in the range from 10 to 10000 kPa, or from 20 to 5000 kPa, or from 50 to 2000 kPa, or from 60 to 1500 kPa, or from 70 to 1000 kPa, or from 80 to 800 kPa, or from 90 to 600 kPa.

References to the pressure in any step of the claimed process refer to the absolute pressure in the reaction zone, which may comprise any suitable form of reactor vessel.

The deposition of silicon by CVI results in the elimination of by-products, particularly by-product gases such as hydrogen. Step (b) preferably further comprises the separation of by-products from the particles formed in step (b). Separation of by-products may be effected by flushing the reactor with an inert gas and/or by evacuating the reactor by reducing the pressure. For example, the separation of by-products from the particles formed in step (b) may be effected by evacuating the reactor to a pressure of less than 100 kPa, or less than 80 kPa, or less than 60 kPa, or less than 40 kPa, or less than 20 kPa, or less than 10 kPa, or less than 5 kPa, or less than 2 kPa, or less than 1 kPa. Evacuating the reactor to low pressure may be effective not only to remove by-products in the gas phase, but also to desorb any by-products that may be adsorbed onto the surfaces of the deposited silicon.

The composite particles obtained in step (b) preferably comprise at least 26 wt% silicon, or at least 28 wt% silicon, or at least 30 wt% silicon, or at least 32 wt% silicon, or at least 34 wt% silicon, or at least 36 wt% silicon, or at least 38 wt% silicon, or at least 40 wt% silicon, or at least 42 wt% silicon, or at least 44 wt% silicon, based on the total mass of the particles.

The amount of silicon in the composite particles is preferably selected such that at least 20% and up to 90% of the internal pore volume of the porous particles is occupied by the silicon following step (b). For example, the silicon may occupy from 20% to 80%, or from 25% to 75%, or from 30% to 70%, or from 35 to 65%, or from 40 to 60%, or from 45% to 55% of the internal pore volume of the porous particles. Within these preferred ranges, the remaining pore volume of the porous particles is effective to accommodate expansion of the silicon during charging and discharging, without a large excess pore volume which does not contribute to the volumetric capacity of the particulate particles. However, the amount of silicon is also not so high as to impede effective lithiation due to inadequate metal-ion diffusion rates or due to inadequate expansion volume resulting in mechanical resistance to lithiation.

The amount of silicon in the composite particles can be related to the available pore volume in the porous particles by the requirement that the mass ratio of silicon to the porous particles is in the range from [0.5×P¹ to 1.9×P¹] : 1, wherein P¹ is a dimensionless quantity having the magnitude of the total pore volume of micropores and mesopores in the porous particles, as expressed in cm³/g (e.g. if the porous particles have a total volume of micropores and mesopores of 1.2 cm³/g, then P¹ = 1.2). This relationship takes into account the density of silicon and the pore volume of the porous particles to define a weight ratio of silicon at which the pore volume is around 20% to 82% occupied. Preferably, the weight ratio of silicon deposited in step (b) to the porous particles is in the range from [0.6×P¹ to 1.8×P¹] : 1 or from [0.7×P¹ to 1.7×P¹] : 1, or from [0.8×P¹ to 1.6×P¹] : 1.

The amount of silicon in the composite particles can be determined by elemental analysis. Preferably, elemental analysis is used to determine the elemental composition of the porous particles alone and the composition of the composite particles.

Silicon content is preferably determined by ICP-OES (Inductively coupled plasma-optical emission spectrometry). A number of ICP-OES instruments are commercially available, such as the iCAP^{®} 7000 series of ICP-OES analysers available from ThermoFisher Scientific. The carbon content of the composite particles and of the porous carbon particles alone (as well as the hydrogen, nitrogen and oxygen content if required) are preferably determined by IR absorption. A suitable instrument for determining carbon, hydrogen, nitrogen and oxygen content is the TruSpec^{®} Micro elemental analyser available from Leco Corporation.

Preferably at least 90 wt%, more preferably at least 95 wt%, even more preferably at least 98 wt% of the silicon in the composite particles is located within the internal pore volume of the porous particles such that there is no or very little silicon located on the external surfaces of the composite particles. As discussed above, deposition of silicon in a CVI process occurs at the surfaces of the porous particles. In view of the very high internal surface area of the porous particles, the reaction kinetics of the CVI process ensure that deposition of the silicon occurs almost entirely within the pores of the porous particles. The internal deposition of the silicon is further improved by the requirement that the pressure in step (b) is maintained at less than 200 kPa, or within the more preferred pressure ranges discussed above.

The process of the invention preferably further comprises the step of:
(c) contacting the surface of the particles from step (b) with a passivating agent.

Accordingly, the process of the invention preferably comprises a two-stage passivation procedure in which step (d) is carried out as a post-passivation treatment following passivation in step (c). It will be understood that the passivating agent used in step (c) is different from the water used in step (d).

As defined herein, a passivating agent is a compound of mixture of compounds which is able to react with the surface of the silicon deposited in step (b) to form a modified surface. In particular, a passivating agent as defined herein is a material which is able to react with the silicon surfaces to further reduce the surface energy thereof.

One type of passivation layer is a native oxide layer. A native oxide layer may be formed, for example, by exposing the silicon surface to a passivating agent selected from air or another oxygen containing gas. The passivation layer may comprise an oxide of the formula SiOₓ, wherein 0 < x ≤ 2. The oxide is preferably amorphous. The formation of a native oxide layer is exothermic and therefore requires careful process control to prevent overheating or even combustion of the particulate material. In the case that the passivating agent is an oxygen-containing gas, step (c) may comprise cooling the material formed in step (b) to a temperature below 400 ⁰C, preferably below 300 ⁰C, optionally below 200 ⁰C, prior to contacting the silicon surfaces with the oxygen containing gas.

Another type of passivation layer is a nitride layer that is formed, for example, by exposing the silicon surfaces to a passivating agent selected from ammonia or another nitrogen containing molecule. The passivation layer may comprise a nitride of the formula SiNₓ, wherein 0 < x ≤ 4/3. The nitride is preferably amorphous. A nitride layer may be formed by contacting the silicon surfaces with ammonia at a temperature in the range from 200-700 °C, preferably from 400-700 °C, more preferably from 400-600 ⁰C. The temperature may then be increased if necessary into the range of 500 to 1,000 °C to form a nitride surface. Nitride passivation may be preferred to oxide passivation. As sub-stoichiometric nitrides (such as SiNₓ, wherein 0 < x ≤ 4/3) are conductive, nitride passivation layers may function as a conductive network that allows for faster charging and discharging. Phosphine may also be used as a passivating agent, as a phosphorus analog of ammonia.

Another type of passivation layer is an oxynitride layer that is formed, for example, by exposing the silicon surfaces to a passivating agent comprising ammonia (or another nitrogen containing molecule) and oxygen gas. The passivation layer may comprise a silicon oxynitride of the formula SiOₓN_{y}, wherein 0<x<2, 0<y<4/3, and 0 < (2x+3y) ≤4). The oxynitride is preferably amorphous.

Another type of passivation layer is a carbide layer. The passivation layer may comprise a silicon carbide of the formula SiCₓ, wherein 0 < x ≤ 1. The carbide is preferably amorphous. A carbide layer may be formed by contacting the silicon surfaces with a passivating agent selected from carbon containing precursors, e.g. methane or ethylene at elevated temperatures, e.g. in the range from 250 to 700 °C. At lower temperatures, covalent bonds are formed between the silicon surfaces and the carbon-containing precursors, which are the converted to a monolayer of crystalline carbide as the temperature is increased.

Other suitable passivating agents include compounds comprising an alkene, alkyne or carbonyl functional group, more preferably a terminal alkene, terminal alkyne, aldehyde or ketone group.

Preferred passivating agents include one or more compounds of the formulae:
(i)

   R¹-CH=CH-R¹;
(ii)

   R¹-C≡C-R¹;

   and
(iii)

   O=CR¹R¹;
wherein each R¹ independently represents H or an unsubstituted or substituted aliphatic or aromatic hydrocarbyl group having from 1 to 20 carbon atoms, or wherein two R¹ groups form an unsubstituted or substituted ring structure comprising from 3 to 8 carbon atoms in the ring.

Particularly preferred passivating agents include one or more compounds of the formulae:
(i)

   CH₂=CH-R¹;

   and
(ii)

   HC≡C-R¹;
wherein R¹ is as defined above. Preferably, R¹ is unsubstituted.

Examples of suitable passivating agents include ethylene, propylene, 1-butene, butadiene, 1-pentene, 1,4-pentadiene, 1-hexene, 1-octene, styrene, divinylbenzene, acetylene, phenylacetylene, norbornene, norbornadiene and bicyclo[2.2.2]oct-2-ene. Optionally, mixtures of different passivating agents may also be used.

It is believed that passivating agents comprising an alkene, alkyne or carbonyl group undergo an insertion reaction with M-H groups (e.g. Si-H groups) at the silicon surface to form a covalently passivated surface which is resistant to oxidation by air. For example, the passivation reaction between a silicon surface and the passivating agent may therefore be understood as a form of hydrosilylation, as shown schematically below.

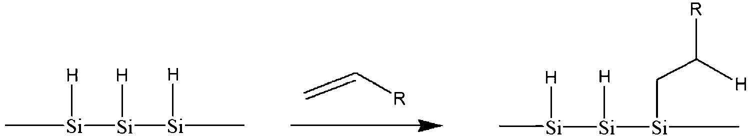

Other suitable passivating agents include compounds including an active hydrogen atom bonded to oxygen, nitrogen, sulphur or phosphorus. For example, the passivating agent may be an alcohol, amine, thiol or phosphine. Reaction of the group -XH with hydride groups at the silicon surfaces is understood to result in elimination of H₂ and the formation of a direct bond between X and the silicon surfaces.

Suitable passivating agents in this category include compounds of the formula
(iv)

   HX-R²,

   and
(v)

   HX-C(O)-R¹,
wherein X represents O, S, NR¹ or PR¹; each R¹ is independently as defined above; and R² represents an unsubstituted or substituted aliphatic or aromatic hydrocarbyl group having from 1 to 20 carbon atoms, or R¹ and R² together form an unsubstituted or substituted ring structure comprising from 3 to 8 carbon atoms in the ring.

Preferably X represents O or NH.

Preferably R² represents an optionally substituted aliphatic or aromatic group having from 2 to 10 carbon atoms. Amine groups may also be incorporated into a 4-10 membered aliphatic or aromatic ring structure, as in pyrrolidine, pyrrole, imidazole, piperazine, indole, or purine.

Contacting of the silicon with the passivating agent in step (d) may be carried out at a temperature in the range of 25 to 500 °C, preferably at a temperature in the range of from 50 to 450 °C, more preferably from 100 to 400 °C.

The process of the invention optionally further comprises the step of subjecting the particles from step (b) to heat treatment at a temperature of at least 400 °C and in the presence of an inert gas prior to the subsequent step.

This heat treatment is thought to promote the elimination of hydrogen and the solid-state rearrangement of the silicon atoms, thereby reducing the density of unstable and reactive Si-H bonds and promoting the formation of more thermodynamically stable Si-Si bonds. This is believed to contribute to improved stability of the silicon during charging and discharging and therefore to an improvement in the cycle life of metal-ion batteries comprising the composite particles.

The temperature during the heat treatment step is generally greater than the temperature in step (b). Preferably, the temperature during the heat treatment step is at least 20 °C, or at least 40 °C, or at least 60 °C, or at least 80 °C, or at least 100 °C, or at least 120 °C, or at least 140 °C, or at least 150 °C greater than the temperature in step (b).

The heat treatment step is carried out in the presence of an inert gas. An inert gas refers herein to any gas that does not undergo reaction under the prevailing reaction conditions. Preferably, the inert gas is selected from nitrogen and the noble gases, in particular argon. Optionally, the inert gas may comprise hydrogen. The inert gas may be selected from the group consisting of nitrogen, argon, helium and combinations thereof.

The heat treatment step is carried out before steps (c) and (d). One effect of the heat treatment step is to reopen pore spaces that were previously obstructed or capped by silicon nanostructures, such that the pore spaces are accessible to passivating gases, thus allowing for a more extensive passivation of the silicon surfaces and the reduction or elimination of hydrogen-terminated silicon surfaces.

The characteristics of the porous particles used in process of the invention as well of the CVI conditions described above are carefully controlled to obtain composite particles that contain fine silicon nanostructures with dimensions of the order of a few nanometres or less. The morphology of these silicon nanostructures can be analysed by thermogravimetric analysis (TGA) in air. This method of analysis relies on the principle that a weight gain is observed when silicons are oxidized in air and at elevated temperature. Atoms at or near the surface of an electroactive nanostructure are oxidized at a lower temperature than atoms in the bulk (reference: Bardet et al., Phys. Chem. Chem. Phys. (2016), 18, 18201). By plotting the weight gain against temperature, it is possible to differentiate and quantify the environment of the atoms of the silicon in the sample.

As noted above, WO 2022/029422, uses the term "surface silicon" to refer to silicon atoms in a surface region of the silicon nanostructures, and the term "coarse bulk silicon" to refer to silicon atoms located inside bulky/coarse silicon structures. It has been found that optimum performance is achieved when there is a high ratio of "surface silicon" to "coarse bulk silicon".

As defined herein, "surface silicon" is calculated from the initial mass increase in the TGA trace from a minimum between 150 °C and 500 °C to the maximum mass measured in the temperature range between 550 °C and 650 °C, wherein the TGA is carried out in air with a temperature ramp rate of 10 °C/min. This mass increase is results from the oxidation of silicon atoms that are proximal to the surfaces of silicon nanostructures and is therefore referred to herein as "surface silicon". A high content of surface silicon indicates that the silicon content of the composite particles is primarily in the form of very fine nanostructures.

The percentage of surface silicon as a proportion of the total amount of silicon to be determined according to the following formula: $Y = 1.875 \times \left[\left({M}_{max}-{M}_{min}\right)/{M}_{f}\right] \times 100 %$

Wherein Y is the percentage of surface silicon as a proportion of the total silicon in the sample, Mₘₐₓ is the maximum mass of the sample measured in the temperature range between 550 °C to 650 °C, Mₘᵢₙ is the minimum mass of the sample above 150 °C and below 500 °C, and M_{f} is the mass of the sample at completion of oxidation at 1400 °C. For completeness, it will be understood that 1.875 is the molar mass ratio of SiO₂ to O₂ (i.e. the mass ratio of SiO₂ formed to the mass increase due to the addition of oxygen). Typically, the TGA analysis is carried out using a sample size of 10 mg ±2 mg.

It has been found that reversible capacity retention over multiple charge/discharge cycles is considerably improved when the surface silicon as determined by the TGA method described above is at least 20 wt% of the total amount of silicon in the material. Preferably at least 22 wt%, or at least 25 wt%, at least 30 wt% of the silicon, or at least 35 wt% of the silicon, or at least 40 wt% of the silicon, or at least 45 wt% of the silicon is surface silicon as determined by thermogravimetric analysis (TGA).

In addition to the surface silicon content, the silicon-containing composite particles obtained by the process of the invention preferably have a low content of coarse bulk silicon as determined by TGA. Coarse bulk silicon is defined herein as silicon which undergoes oxidation above 800 °C as determined by TGA, wherein the TGA is carried out in air with a temperature ramp rate of 10 °C/min. A high content of coarse bulk silicon indicates that the silicon content of the composite particles is primarily in the form of bulky, coarse silicon domains, which may include undesirable silicon deposition on the exterior surfaces of the composite particles.

The coarse bulk silicon content is determined according to the following formula: $Z = 1.875 \times \left[\left({M}_{f}-{M}_{800}\right)/{M}_{f}\right] \times 100 %$

Wherein Z is the percentage of unoxidized silicon at 800 °C, M₈₀₀ is the mass of the sample at 800 °C, and M_{f} is the mass of ash at completion of oxidation at 1400 °C. For the purposes of this analysis, it is assumed that any mass increase above 800 °C corresponds to the oxidation of silicon to SiO₂ and that the total mass at completion of oxidation is SiO₂. Typically, the TGA analysis is carried out using a sample size of 10 mg ±2 mg.

Silicon that undergoes oxidation above 800 °C is less desirable. Preferably, no more than 10 wt%, or no more than 8 wt%, or no more than 6 wt%, or no more than 5 wt%, or no more than 4 wt%, or no more than 3 wt%, or no more than 2 wt%, or no more than 1.5 wt% of the silicon is coarse bulk silicon as determined by TGA.

Preferably, at least 25 wt% of the silicon is surface silicon and no more than 10 wt% of the silicon is coarse bulk silicon, wherein both are determined by TGA. More preferably, at least 30 wt% of the silicon is surface silicon and no more than 10 wt% of the silicon is coarse bulk silicon, wherein both are determined by TGA. More preferably, at least 30 wt% of the silicon is surface silicon and no more than 8 wt% of the silicon is coarse bulk silicon, wherein both are determined by TGA. More preferably, at least 35 wt% of the silicon is surface silicon and no more than 8 wt% of the silicon is coarse bulk silicon, wherein both are determined by TGA. More preferably, at least 30 wt% of the silicon is surface silicon and no more than 6 wt% of the silicon is coarse bulk silicon, wherein both are determined by TGA. More preferably, at least 35 wt% of the silicon is surface silicon and no more than 4 wt% of the silicon is coarse bulk silicon, wherein both are determined by TGA. More preferably, at least 40 wt% of the silicon is surface silicon and no more than 5 wt% of the silicon is coarse bulk silicon, wherein both are determined by TGA. More preferably, at least 45 wt% of the silicon is surface silicon and no more than 2 wt% of the silicon is coarse bulk silicon, wherein both are determined by TGA.

Reference is made to WO 2022/029422 for further disclosure with respect to the production of composite particles comprising a high content of "surface silicon" and a low content of "coarse bulk silicon", as well as the measurement thereof by TGA.

The foregoing disclosure of preferred embodiments provides an optimised pore structure of the porous particle framework and a set of conditions for the deposition of silicon into the porous particle framework that allows for an increased proportion of "surface silicon" and a low content of "coarse bulk silicon" while also ensuring a large amount of silicon in total is incorporated into the composite particles to meet overall volumetric energy density requirements.

The composite particles obtained according to the process of the invention preferably have a BET surface area of no more than 100 m²/g, or no more than 80 m²/g, or no more than 60 m²/g, or no more than 40 m²/g, or no more than 30 m²/g, or no more than 25 m²/g, or no more than 20 m²/g, or no more than 15 m²/g, or no more than 10 m²/g, or no more than 5 m²/g. In general, a low BET surface area is preferred in order to minimize the formation of solid electrolyte interphase (SEI) layers at the surface of the composite particles during the first charge-discharge cycle of an anode. However, a BET surface area which is excessively low results in unacceptably low charging rate and capacity due to the inaccessibility of the bulk of the silicon to metal ions in the surrounding electrolyte. The BET surface area is preferably at least 0.1 m²/g, or at least 1 m²/g, or at least 2 m²/g, or at least 5 m²/g. For instance, the BET surface area of the composite particles may be in the range from 0.1 to 100 m²/g, or from 0.1 to 80 m²/g, or from 0.5 to 60 m²/g, or from 0.5 to 40 m²/g, or from 1 to 30 m²/g, or from 1 to 25 m²/g, or from 2 to 20 m²/g.

The composite particles obtained according to the process of the invention generally have a 7-day hydrogen activity in water of less than 40 µmol·per gram of silicon, or less than 35 µmol per gram of silicon, or less than 30 µmol per gram of silicon, or less than 25 µmol per gram of silicon, or less than 20 µmol per gram of silicon, or less than 15 µmol per gram of silicon, or less than 12 µmol per gram of silicon, or less than 10 µmol per gram of silicon.

Preferably, the composite particles obtained according to the process of the invention have a 7-day hydrogen activity in water of less than 8 µmol·per gram of silicon, or less than 7 µmol·per gram of silicon.

More preferably, the composite particles obtained according to the process of the invention have a 7-day hydrogen activity in water of less than 6 µmol·per gram of silicon, or less than 5.5 µmol per gram of silicon, or less than 5 µmol·per gram of silicon, or less than 4.5 µmol per gram of silicon, or less than 4 µmol per gram of silicon, or less than 3.5 µmol per gram of silicon, or less than 3 µmol per gram of silicon, or less than 2.5 µmol per gram of silicon, or less than 2 µmol per gram of silicon.

The composite particles obtained according to the process of the invention optionally have a 7-day hydrogen activity in water of at least 0.1 µmol·per gram of silicon, or at least 0.2 µmol·per gram of silicon, or at least 0.3 µmol·per gram of silicon, or at least 0.4 µmol·per gram of silicon, or at least 0.5 µmol·per gram of silicon, or at least 0.6 µmol·per gram of silicon, or at least 0.8 µmol·per gram of silicon, or at least 1 µmol·per gram of silicon.

Preferably, the composite particles obtained according to the process of the invention have a 3-day hydrogen activity in water of less than 30 µmol per gram of silicon, or less than 20 µmol per gram of silicon, or less than 15 µmol per gram of silicon, or less than 12 µmol per gram of silicon, or less than 10 µmol per gram of silicon, or less than 8 µmol·per gram of silicon, or less than 7 µmol·per gram of silicon, or less than 6 µmol·per gram of silicon, or less than 5 µmol·per gram of silicon.

More preferably, the composite particles obtained according to the process of the invention have a 3-day hydrogen activity in water of less than 4.5 µmol per gram of silicon, or less than 4 µmol per gram of silicon, or less than 3.5 µmol per gram of silicon, or less than 3 µmol per gram of silicon, or less than 2.5 µmol per gram of silicon, or less than 2 µmol per gram of silicon, or less than 1.5 µmol·per gram of silicon, or less than 1.2 µmol·per gram of silicon.

Preferably, the composite particles obtained according to the process of the invention have a 2-day hydrogen activity in water of less than 20 µmol per gram of silicon, or less than 15 µmol per gram of silicon, or less than 12 µmol per gram of silicon, or less than 10 µmol per gram of silicon, or less than 8 µmol per gram of silicon, or less than 7 µmol·per gram of silicon, or less than 6 µmol·per gram of silicon, or less than 5 µmol·per gram of silicon, or less than 4.5 µmol·per gram of silicon.

More preferably, the composite particles obtained according to the process of the invention have a 2-day hydrogen activity in water of less than 4 µmol per gram of silicon, or less than 3.5 µmol per gram of silicon, or less than 3 µmol per gram of silicon, or less than 2.5 µmol per gram of silicon, or less than 2 µmol per gram of silicon, or less than 1.5 µmol per gram of silicon, or less than 1.2 µmol·per gram of silicon, or less than 1 µmol·per gram of silicon.

Preferably, the composite particles obtained according to the process of the invention have a 1-day hydrogen activity in water of less than less than 7 µmol·per gram of silicon, or less than 6 µmol·per gram of silicon, or less than 5 µmol·per gram of silicon, or less than 4.5 µmol·per gram of silicon, or 4 µmol per gram of silicon, or less than 3.5 µmol per gram of silicon, or less than 3 µmol per gram of silicon, or less than 2.5 µmol per gram of silicon, or less than 2 µmol per gram of silicon, or less than 1.5 µmol per gram of silicon, or less than 1.2 µmol·per gram of silicon, or less than 1 µmol·per gram of silicon, or less than 0.8 µmol·per gram of silicon, or less than 0.6 µmol per gram of silicon, or less than 0.5 µmol·per gram of silicon.

Preferably, the composite particles obtained according to the process of the invention have a 1-hour hydrogen activity in water of less than 1 µmol·per gram of silicon, or less than 0.8 µmol·per gram of silicon, or less than 0.6 µmol per gram of silicon, or less than 0.5 µmol·per gram of silicon, or less than 0.4 µmol per gram of silicon, or less than 0.3 µmol per gram of silicon, or less than 0.2 µmol·per gram of silicon, or less than 0.1 µmol per gram of silicon, or less than 0.05 µmol per gram of silicon, or less than 0.01 µmol·per gram of silicon.

The process of the reaction may be carried out using any reactor that is capable of contacting solids and gases at elevated temperature. The porous particles and the forming composite particles may be present in the reactor in the form of a static bed of particles, or in the form of a moving or agitated bed of particles.

The composite particles obtained according to the first aspect of the invention are a novel material in view of their exceptional stability to oxidation and hydrogen generation when contacted with water (e.g. atmospheric moisture or the water used to make aqueous particle slurries during electrode manufacture. Accordingly, the second aspect of the invention provides composite particles obtainable by the process of the first aspect.

In a third aspect, the invention provides composite particles comprising a porous particle framework and silicon, wherein:
(a) the porous particle framework comprises micropores and/or mesopores, wherein the total pore volume of micropores and mesopores as measured by nitrogen gas adsorption is in the range from 0.4 to 2.2 cm³/g;
(b) the silicon is located within the micropores and/or mesopores of the porous particle framework;
wherein the composite particles have a 7-day hydrogen activity in water of less than 40 µmol·per gram of silicon.

The composite particles of the third aspect are characterized by a very low level of hydrogen evolution when in contact with water. This property of the composite particles is referred to herein as the "hydrogen activity" of the composite particles and is defined as the cumulative hydrogen evolution over 7 days in µmol·per gram of silicon. The hydrogen activity is measured by storing 0.5 g of composite particles in 10 g of deionised water in a 20 mL vial with an injectable vial cap for 7 days (168 hours) at 25 °C. The cumulative hydrogen evolution is measured by gas chromatography. The result is then normalised to 1 g of silicon.

Preferably, the composite particles of the invention have a 7-day hydrogen activity in water of less than 35 µmol per gram of silicon, or less than 30 µmol per gram of silicon, or less than 25 µmol per gram of silicon, or less than 20 µmol per gram of silicon, or less than 15 µmol per gram of silicon, or less than 12 µmol per gram of silicon, or less than 10 µmol per gram of silicon.

More preferably, the composite particles of the invention have a 7-day hydrogen activity in water of less than 8 µmol·per gram of silicon, or less than 7 µmol·per gram of silicon.

Still more preferably, the composite particles of the invention have a 7-day hydrogen activity in water of less than 6 µmol·per gram of silicon, or less than 5.5 µmol per gram of silicon, or less than 5 µmol·per gram of silicon, or less than 4.5 µmol per gram of silicon, or less than 4 µmol per gram of silicon, or less than 3.5 µmol per gram of silicon, or less than 3 µmol per gram of silicon, or less than 2.5 µmol per gram of silicon, or less than 2 µmol per gram of silicon.

Optionally, the composite particles of the invention have a 7-day hydrogen activity in water of at least 0.1 µmol·per gram of silicon, or at least 0.2 µmol·per gram of silicon, or at least 0.3 µmol·per gram of silicon, or at least 0.4 µmol·per gram of silicon, or at least 0.5 µmol·per gram of silicon, or at least 0.6 µmol·per gram of silicon, or at least 0.8 µmol·per gram of silicon, or at least 1 µmol·per gram of silicon.

Preferably, the composite particles of the invention have a 3-day hydrogen activity in water of less than 30 µmol per gram of silicon, or less than 20 µmol per gram of silicon, or less than 15 µmol per gram of silicon, or less than 12 µmol per gram of silicon, or less than 10 µmol per gram of silicon, or less than 8 µmol·per gram of silicon, or less than 7 µmol·per gram of silicon, or less than 6 µmol·per gram of silicon, or less than 5 µmol·per gram of silicon.

More preferably, the composite particles of the invention have a 3-day hydrogen activity in water of less than 4.5 µmol per gram of silicon, or less than 4 µmol per gram of silicon, or less than 3.5 µmol per gram of silicon, or less than 3 µmol per gram of silicon, or less than 2.5 µmol per gram of silicon, or less than 2 µmol per gram of silicon, or less than 1.5 µmol·per gram of silicon, or less than 1.2 µmol·per gram of silicon.

Preferably, the composite particles of the invention have a 2-day hydrogen activity in water of less than 20 µmol per gram of silicon, or less than 15 µmol per gram of silicon, or less than 12 µmol per gram of silicon, or less than 10 µmol per gram of silicon, or less than 8 µmol per gram of silicon, or less than 7 µmol·per gram of silicon, or less than 6 µmol·per gram of silicon, or less than 5 µmol·per gram of silicon, or less than 4.5 µmol·per gram of silicon.

More preferably, the composite particles of the invention have a 2-day hydrogen activity in water of less than 4 µmol per gram of silicon, or less than 3.5 µmol per gram of silicon, or less than 3 µmol per gram of silicon, or less than 2.5 µmol per gram of silicon, or less than 2 µmol per gram of silicon, or less than 1.5 µmol per gram of silicon, or less than 1.2 µmol·per gram of silicon, or less than 1 µmol·per gram of silicon.

Preferably, the composite particles of the invention have a 1-day hydrogen activity in water of less than 7 µmol·per gram of silicon, or less than 6 µmol·per gram of silicon, or less than 5 µmol·per gram of silicon, or less than 4.5 µmol·per gram of silicon, or 4 µmol per gram of silicon, or less than 3.5 µmol per gram of silicon, or less than 3 µmol per gram of silicon, or less than 2.5 µmol per gram of silicon, or less than less than 2 µmol per gram of silicon, or less than 1.5 µmol per gram of silicon, or less than 1.2 µmol·per gram of silicon, or less than 1 µmol·per gram of silicon, or less than 0.8 µmol·per gram of silicon, or less than 0.6 µmol per gram of silicon, or less than 0.5 µmol·per gram of silicon.

Preferably, the composite particles of the invention have a 1-hour hydrogen activity in water of less than 1 µmol·per gram of silicon, or less than 0.8 µmol·per gram of silicon, or less than 0.6 µmol per gram of silicon, or less than 0.5 µmol·per gram of silicon, or less than 0.4 µmol·per gram of silicon, or less than 0.3 µmol per gram of silicon, or less than 0.2 µmol·per gram of silicon, or less than 0.1 µmol per gram of silicon, or less than 0.05 µmol per gram of silicon, or less than 0.01 µmol·per gram of silicon.

Preferably, the composite particles of the invention have a total oxygen content of less than 5 wt%, or less than 4.5 wt%, or less than 4 wt%, or less than 3.5 wt%, or less than 3.2 wt%, or less than 3 wt%, or less than 2 wt%, or less than 1 wt%, or less than 0.5 wt% based on the total mass of the composite particles.

The porous particle framework corresponds to the porous particles used in the first aspect of the invention after they are incorporated into composite particles. Accordingly, the porous particle framework may have any of the properties described herein for the porous particles used in the first aspect.

The porous carbon framework generally comprises a three-dimensionally interconnected open pore network comprising a micropores and/or mesopores. The total pore volume of micropores and mesopores as measured by nitrogen gas adsorption is in the range from 0.4 to 2.2 cm³/g. The porous carbon framework may optionally further comprise a minor volume of macropores. For the avoidance of doubt, references herein to the pore volume of the porous carbon framework relate (in the absence of any indication to the contrary) to the pore volume of the porous carbon framework in isolation, i.e. as measured in the absence of any silicon (or any other material) occupying the pores of the porous carbon framework.

The total volume of micropores and mesopores in the porous particle framework as measured by nitrogen gas adsorption is preferably at least 0.45 cm³/g, or at least 0.5 cm³/g, or at least 0.55 cm³/g, or at least 0.6 cm³/g, or at least 0.65 cm³/g, or at least 0.7 cm³/g, or at least 0.75 cm³/g.

Preferably, the total volume of micropores and mesopores in the porous particle framework as measured by nitrogen gas adsorption is no more than 2.0 cm³/g, or no more than 1.8 cm³/g, or no more than 1.7 cm³/g, or no more than 1.6 cm³/g, or no more than 1.55 cm³/g, or no more than 1.5 cm³/g, or no more than 1.45 cm³/g, or no more than 1.4 cm³/g, or no more than 1.35 cm³/g, or no more than 1.3 cm³/g, or no more than 1.25 cm³/g, or no more than 1.2 cm³/g, or no more than 1.15 cm³/g, or no more than 1.1 cm³/g.

For example, the total volume of micropores and mesopores in the porous particle framework may be in the range from 0.45 to 2 cm³/g, or from 0.5 to 1.8 cm³/g, or from 0.55 to 1.6 cm³/g, or from 0.6 to 1.5 cm³/g, or from 0.65 to 1.4 cm³/g, or from 0.7 to 1.3 cm³/g, or from 0.75 to 1.2. cm³/g.

The PD₅₀ pore diameter of the porous particle framework is preferably no more than 10 nm, or no more than 8 nm, or no more than 6 nm, or no more than 5 nm, or no more than 4 nm, or no more than 3 nm, or no more than 2.5 nm, or no more than 2 nm, or no more than 1.9 nm, or no more than 1.8 nm, or no more than 1.7 nm, or no more than 1.6 nm.

The PD₉₀ pore diameter of the porous particle framework is preferably no more than 20 nm, or no more than 15 nm, or no more than 12 nm, or no more than 10 nm, or no more than 8 nm, or no more than 6 nm, or no more than 5 nm. Preferably, the PD₉₀ pore diameter of the porous particle framework is at least 3.2 nm, or at least 3.5 nm, or at least 3.8 nm, or at least 4 nm. For example, the PD₉₀ pore diameter of the porous particle framework is preferably in the range from 3.2 to 20 nm, or from 3.5 to 15 nm, or from 3.8 to 10 nm, or from 4 to 8 nm.

The micropore volume fraction of the porous particle framework is preferably at least 0.4, or at least 0.45, or at least 0.5, or at least 0.55, or at least 0.6, based on the total volume of micropores and mesopores in the porous particle framework.

The micropore volume fraction of the porous particle framework is preferably no more than 0.95, or no more than 0.85, or no more than 0.8, or no more than 0.75, or no more than 0.7, based on the total volume of micropores and mesopores in the porous particle framework.

For example, the micropore volume fraction may be in the range from 0.4 to 0.95, or in the range from 0.4 to 0.85, or in the range from 0.45 to 0.85, or in the range from 0.5 to 0.8, or in the range from 0.55 to 0.75, or in the range from 0.6 to 0.7, based on the total volume of micropores and mesopores in the porous particle framework.

Preferably, the BET surface area of the porous particle framework is no more than 4,000 m²/g, or no more than 3,500 m²/g, or no more than 3,250 m²/g, or no more than 3,000 m²/g or no more than 2,500 m²/g, or no more than 2,000 m²/g. For example, the porous particle framework may have a BET surface area in the range from 100 m²/g to 4,000 m²/g, or 500 m²/g to 4,000 m²/g, or from 750 m²/g to 3,500 m²/g, or from 1,000 m²/g to 3,250 m²/g, or from 1,000 m²/g to 3,000 m²/g, or from 1,000 m²/g to 2,500 m²/g, or from 1,000 m²/g to 2,000 m²/g.

The porous particle framework is preferably a conductive porous particle framework, more preferably a conductive porous carbon particle framework, more preferably a conductive porous carbon particle framework comprising at least 80 wt% carbon, or at least 85 wt% carbon, or at least 90 wt% carbon, or at least 95 wt% carbon. Suitable materials for the porous carbon framework are described in connection with the first aspect of the invention.

The composite particles of the third aspect preferably contain at least 26 wt%, or at least 28 wt%, or at least 30 wt%, or at least 32 wt%, or at least 34 wt%, or at least 36 wt%, or at least 38 wt%, or at least 40 wt%, or at least 42 wt%, or at least 44 wt% silicon Preferably, the composite particles of the third aspect contain no more than 64 wt% silicon, or no more than 62 wt% silicon, or no more than 60 wt%, or no more than 58 wt%, or no more than 56 wt%, or no more than 54 wt%, or no more than 52 wt%, or no more than 50 wt% silicon.

For example, the composite particles of the third aspect may contain from 26 to 65 wt%, or from 28 to 65 wt%, or from 30 to 65 wt%, or from 32 to 60 wt%, or from 34 to 60 wt%, or from 36 to 60 wt%, or from 38 to 58 wt%, or from 40 to 58 wt%, or from 42 to 56 wt%, or from 44 to 54 wt% silicon.

The composite particles of the third aspect can be characterised by their performance under thermogravimetric analysis (TGA) in air as described above.

Preferably at least 22 wt%, or at least 25 wt%, at least 30 wt% of the silicon, or at least 35 wt% of the silicon, or at least 40 wt% of the silicon, or at least 45 wt% of the silicon is surface silicon as determined by thermogravimetric analysis (TGA).

Preferably, no more than 10 wt%, or no more than 8 wt%, or no more than 6 wt%, or no more than 5 wt%, or no more than 4 wt%, or no more than 3 wt%, or no more than 2 wt% or no more than 1.5 wt% of the silicon is coarse bulk silicon as determined by TGA.

Preferably at least 30 wt% of the silicon (for example 30 to 75 wt%, 30 to 70 wt% or 30 to 65 wt% of the silicon) is surface silicon and no more than 10 wt% of the silicon is coarse bulk silicon, wherein both are determined by TGA. More preferably at least 35 wt% of the silicon (for example 35 to 70 wt%, 35 to 65 wt% or 35 to 60 wt% of the silicon) is surface silicon and no more than 8 wt% of the silicon is coarse bulk silicon, wherein both are determined by TGA. More preferably, at least 40 wt% of the silicon (for example 40 to 65 wt%, 40 to 60 wt%, or 40 to 55 wt% of the silicon) is surface silicon and no more than 5 wt% of the silicon is coarse bulk silicon, wherein both are determined by TGA. More preferably, at least 45 wt% of the silicon is surface silicon and no more than 2 wt% of the silicon is coarse bulk silicon, wherein both are determined by TGA.

In general, the composite particles of the third aspect have a D₅₀ particle diameter in the range from 1 to 25 µm. Preferably, the D₅₀ particle diameter of the composite particles is at least 1.5 µm, or at least 2 µm, or at least 2.5 µm, or at least 3 µm. Preferably, the D₅₀ particle diameter of the composite particles is no more than 20 µm, or no more than 18 µm, or no more than 15 µm, or no more than 12 µm, or no more than 10 µm, or no more than 8 µm. For example, the D₅₀ particle diameter of the composite particles may be in the range from 1.5 to 18 µm, or in the range from 1.5 to 15 µm, or in the range from 2 to 12 µm, or in the range from 2 to 10 µm, or in the range from 2.5 to 8 µm, or in the range from 3 to 8 µm.

The D₉₀ particle diameter of the composite particles is preferably no more than 30 µm, or no more than 25 µm, or no more than 20 µm, or no more than 18 µm, or no more than 15 µm.

The D₁ particle diameter of the composite particles is preferably at least 0.1 µm, or at least 0.25 µm, or at least 0.5 µm. Preferably, the D₉₉ particle diameter of the composite particles is no more than 50 µm, or no more than 40 µm, or no more than 30 µm.

The composite particles preferably have a narrow particle diameter distribution span. For instance, the particle diameter distribution span (defined as (D₉₀-D₁₀)/D₅₀) is preferably 3 or less, more preferably 2 or less, and most preferably 1.5 or less. By maintaining a narrow particle diameter distribution span, efficient packing of the particles into dense powder beds is more readily achievable.

The composite particles preferably have a positive skew in the volume-based particle diameter distribution. Preferably, the D₅₀ diameter is less than the volume-based mean particle diameter. Preferably, the skew of the composite particle diameter distribution (as measured by a Malvern Mastersizer^{TM} 3000 analyzer) is no more than 4, or no more than 3, or no more than 2, or no more than 1.5. Preferably, the skew is at least 0.2, or at least 0.3, or at least 0.4. The particle diameter distribution of the composite particles may be monomodal, bimodal or multimodal.

The composite particles of the third aspect preferably have a BET surface area of no more than 100 m²/g, or no more than 80 m²/g, or no more than 60 m²/g, or no more than 50 m²/g, or no more than 40 m²/g, or no more than 30 m²/g, or no more than 25 m²/g, or no more than 20 m²/g, or no more than 15 m²/g, or no more than 10 m²/g.

In general, a low BET surface area is preferred in order to minimize the formation of solid electrolyte interphase (SEI) layers at the surface of the composite particles during the first charge-discharge cycle of an anode. However, a BET surface area which is excessively low results in unacceptably low charging rate and capacity due to the inaccessibility of the bulk of the silicon to metal ions in the surrounding electrolyte. The BET surface area is preferably at least 0.1 m²/g, or at least 1 m²/g, or at least 2 m²/g, or at least 5 m²/g. For instance, the BET surface area of the composite particles may be in the range from 0.1 to 100 m²/g, or from 0.1 to 80 m²/g, or from 0.5 to 60 m²/g, or from 0.5 to 40 m²/g, or from 1 to 30 m²/g, or from 1 to 25 m²/g, or from 2 to 20 m²/g.

The composite particles of the third aspect preferably have a total pore volume of gas-accessible micropores and mesopores of no more than 0.1 cm³/g, or no more than 0.05 cm³/g, or no more than 0.02 cm³/g, or no more than 0.01 cm³/g, or no more than 0.008 cm³/g.

The composite particles of the third aspect may also have a functional coating or shell fully or partially covering the external surfaces of the composite particles. A functional coating or shell is a coating or shell that improves the functional performance of the composite particles when used as an electroactive material in the negative electrode of a lithium ion cell or battery. For example, a functional coating or shell may do one or more of: increasing electronic and/or ionic conductivity; or improving the structural strength or mechanical robustness of the particles during handling or during lithiation/delithiation in a cell; or enhancing the chemical compatibility of the surface of the composite particles with other components in an electrode, an electrode composition or electrode slurry.

Preferably in the composite particles of the invention:
(i) the porous particle framework has a total pore volume of micropores and mesopores as measured by nitrogen gas adsorption in the range from 0.6 to 1.5 cm³/g; a PD₅₀ pore diameter of no more than 3 nm; and preferably a PD₉₀ pore diameter of no more than 10 nm;
(ii) Z is no more than 10% and preferably Y is at least 20%;
(iii) the oxygen content is less than 4 wt%;
(iv) the D₅₀ particle diameter is in the range from 1 to 18 µm;
(v) the BET surface area is no more than 20 m²/g; and
(vi) the 7-day hydrogen activity is less than 40 µmol per gram of silicon, preferably less than 30 µmol per gram of silicon.

More preferably in the composite particles of the invention:
(i) the porous particle framework has a total pore volume of micropores and mesopores as measured by nitrogen gas adsorption in the range from 0.6 to 1.4 cm³/g; a PD₅₀ pore diameter of no more than 2.5 nm; and preferably a PD₉₀ pore diameter of no more than 8 nm;
(ii) Z is no more than 10% and preferably Y is at least 25%;
(iii) the oxygen content is less than 3.5 wt%;
(iv) the D₅₀ particle diameter is in the range from 1.5 to 12 µm;
(v) the BET surface area is no more than 15 m²/g; and
(vi) the 7-day hydrogen activity is less than 25 µmol per gram of silicon, preferably less than 20 µmol per gram of silicon.

More preferably in the composite particles of the invention:
(i) the porous particle framework has a total pore volume of micropores and mesopores as measured by nitrogen gas adsorption in the range from 0.65 to 1.3 cm³/g; a PD₅₀ pore diameter of no more than 2 nm; and preferably a PD₉₀ pore diameter of no more than 6 nm;
(ii) Z is no more than 8% and preferably Y is at least 28%;
(iii) the oxygen content is less than 3.2 wt%;
(iv) the D₅₀ particle diameter is in the range from 2 to 10 µm;
(v) the BET surface area is no more than 10 m²/g; and
(vi) the 7-day hydrogen activity is less than 15 µmol per gram of silicon, preferably less than 12 µmol per gram of silicon.

More preferably in the composite particles of the invention:
(i) the porous particle framework has a total pore volume of micropores and mesopores as measured by nitrogen gas adsorption in the range from 0.7 to 1.2 cm³/g; a PD₅₀ pore diameter of no more than 1.8 nm; and preferably a PD₉₀ pore diameter of no more than 5 nm;
(ii) Z is no more than 7% and preferably Y is at least 30%;
(iii) the oxygen content is less than 3.2 wt%;
(iv) the D₅₀ particle diameter is in the range from 2.5 to 8 µm;
(v) the BET surface area is no more than 8 m²/g; and
(vi) the 7-day hydrogen activity is less than 10 µmol per gram of silicon, preferably less than 8 µmol per gram of silicon.

Further preferred composite particles of the invention include those in which:
(i) the porous particle framework has a total pore volume of micropores and mesopores as measured by nitrogen gas adsorption in the range from 0.4 to 1.8 cm³/g; a PD₅₀ pore diameter of no more than 10 nm; and preferably a PD₉₀ pore diameter of no more than 20 nm;
(ii) Z is no more than 10% and preferably Y is at least 30%;
(iii) the D₅₀ particle diameter is in the range from 1 to 20 µm;
(iv) the BET surface area is no more than 25 m²/g; and
(v) the 7-day hydrogen activity is less than 20 µmol per gram of silicon, preferably less than 15 µmol per gram of silicon.

Further preferred composite particles of the invention include those in which:
(i) the porous particle framework has a total pore volume of micropores and mesopores as measured by nitrogen gas adsorption in the range from 0.5 to 1.6 cm³/g; a PD₅₀ pore diameter of no more than 8 nm; and preferably a PD₉₀ pore diameter of no more than 15 nm;
(ii) Z is no more than 10% and preferably Y is at least 30%;
(iii) the D₅₀ particle diameter is in the range from 1 to 18 µm;
(iv) the BET surface area is no more than 25 m²/g; and
(v) the 7-day hydrogen activity is less than 15 µmol per gram of silicon, preferably less than 12 µmol per gram of silicon.

Further preferred composite particles of the invention include those in which:
(i) the porous particle framework has a total pore volume of micropores and mesopores as measured by nitrogen gas adsorption in the range from 0.6 to 1.5 cm³/g; a PD₅₀ pore diameter of no more than 6 nm; and preferably a PD₉₀ pore diameter of no more than 12 nm;
(ii) Z is no more than 8% and preferably Y is at least 35%;
(iii) the D₅₀ particle diameter is in the range from 1.5 to 15 µm;
(iv) the BET surface area is no more than 20 m²/g; and
(v) the 7-day hydrogen activity is less than 12 µmol per gram of silicon, preferably less than 10 µmol per gram of silicon.

Further preferred composite particles of the invention include those in which:
(i) the porous particle framework has a total pore volume of micropores and mesopores as measured by nitrogen gas adsorption in the range from 0.65 to 1.4 cm³/g; a PD₅₀ pore diameter of no more than 2.5 nm; and preferably a PD₉₀ pore diameter of no more than 10 nm;
(ii) Z is no more than 8% and preferably Y is at least 35%;
(iii) the D₅₀ particle diameter is in the range from 1.5 to 12 µm;
(iv) the BET surface area is no more than 20 m²/g; and
(v) the 7-day hydrogen activity is less than 10 µmol per gram of silicon, preferably less than 8 µmol per gram of silicon.

Further preferred composite particles of the invention include those in which:
(i) the porous particle framework has a total pore volume of micropores and mesopores as measured by nitrogen gas adsorption in the range from 0.7 to 1.3 cm³/g; a PD₅₀ pore diameter of no more than 4 nm; and preferably a PD₉₀ pore diameter of no more than 8 nm;
(ii) Z is no more than 5% and preferably Y is at least 40%;
(iii) the D₅₀ particle diameter is in the range from 2 to 10 µm;
(iv) the BET surface area is no more than 15 m²/g; and
(v) the 7-day hydrogen activity is less than 10 µmol per gram of silicon, preferably less than 8 µmol per gram of silicon.

Further preferred composite particles of the invention include those in which:
(i) the porous particle framework has a total pore volume of micropores and mesopores as measured by nitrogen gas adsorption in the range from 0.75 to 1.2 cm³/g; a PD₅₀ pore diameter of no more than 3 nm; and preferably a PD₉₀ pore diameter of no more than 6 nm;
(ii) Z is no more than 5% and preferably Y is at least 40%;
(iii) the D₅₀ particle diameter is in the range from 2 to 10 µm;
(iv) the BET surface area is no more than 15 m²/g; and
(v) the 7-day hydrogen activity is less than 8 µmol per gram of silicon, preferably less than 7 µmol per gram of silicon.

Further preferred composite particles of the invention include those in which:
(i) the porous particle framework has a total pore volume of micropores and mesopores as measured by nitrogen gas adsorption in the range from 0.8 to 1.2 cm³/g; a PD₅₀ pore diameter of no more than 2 nm, and preferably a PD₉₀ pore diameter of no more than 5 nm;
(ii) Z is no more than 2% and preferably Y is at least 45%;
(iii) the D₅₀ particle diameter is in the range from 2.5 to 8 µm; and
(iv) the BET surface area is no more than 10 m²/g; and
(v) the 7-day hydrogen activity is less than 7 µmol per gram of silicon, preferably less than 6 µmol per gram of silicon.

Further preferred composite particles of the invention include those in which: (i) the porous particle framework has a total pore volume of micropores and mesopores as measured by nitrogen gas adsorption in the range from 0.6 to 1.5 cm³/g; a PD₅₀ pore diameter of no more than 3 nm; and preferably a PD₉₀ pore diameter of no more than 10 nm;
(ii) Z is no more than 10% and preferably Y is at least 20%;
(iii) the oxygen content is less than 4 wt%;
(iv) the D₅₀ particle diameter is in the range from 1 to 18 µm;
(v) the BET surface area is no more than 20 m²/g; and
(vi) the 7-day hydrogen activity is less than 6 µmol per gram of silicon, preferably less than 5.5 µmol per gram of silicon.

Further preferred composite particles of the invention include those in which:
(i) the porous particle framework has a total pore volume of micropores and mesopores as measured by nitrogen gas adsorption in the range from 0.6 to 1.4 cm³/g; a PD₅₀ pore diameter of no more than 2.5 nm; and preferably a PD₉₀ pore diameter of no more than 8 nm;
(ii) Z is no more than 10% and preferably Y is at least 25%;
(iii) the oxygen content is less than 3.5 wt%;
(iv) the D₅₀ particle diameter is in the range from 1.5 to 12 µm;
(v) the BET surface area is no more than 15 m²/g; and
(vi) the 7-day hydrogen activity is less than 5 µmol per gram of silicon, preferably less than 4.5 µmol per gram of silicon.

Further preferred composite particles of the invention include those in which:
(i) the porous particle framework has a total pore volume of micropores and mesopores as measured by nitrogen gas adsorption in the range from 0.65 to 1.3 cm³/g; a PD₅₀ pore diameter of no more than 2 nm; and preferably a PD₉₀ pore diameter of no more than 6 nm;
(ii) Z is no more than 8% and preferably Y is at least 28%;
(iii) the oxygen content is less than 3.2 wt%;
(iv) the D₅₀ particle diameter is in the range from 2 to 10 µm;
(v) the BET surface area is no more than 10 m²/g; and
(vi) the 7-day hydrogen activity is less than 4 µmol per gram of silicon, preferably less than 3.5 µmol per gram of silicon.

Further preferred composite particles of the invention include those in which:
(i) the porous particle framework has a total pore volume of micropores and mesopores as measured by nitrogen gas adsorption in the range from 0.7 to 1.2 cm³/g; a PD₅₀ pore diameter of no more than 1.8 nm; and preferably a PD₉₀ pore diameter of no more than 5 nm;
(ii) Z is no more than 7% and preferably Y is at least 30%;
(iii) the oxygen content is less than 3.2 wt%;
(iv) the D₅₀ particle diameter is in the range from 2.5 to 8 µm;
(v) the BET surface area is no more than 8 m²/g; and
(vi) the 7-day hydrogen activity is less than 3 µmol per gram of silicon, preferably less than 2.5 µmol per gram of silicon.

Further preferred composite particles of the invention include those in which:
(i) the porous particle framework has a total pore volume of micropores and mesopores as measured by nitrogen gas adsorption in the range from 0.4 to 1.8 cm³/g; a PD₅₀ pore diameter of no more than 10 nm; and preferably a PD₉₀ pore diameter of no more than 20 nm;
(ii) Z is no more than 10% and preferably Y is at least 30%;
(iii) the D₅₀ particle diameter is in the range from 1 to 20 µm;
(iv) the BET surface area is no more than 25 m²/g; and
(v) the 7-day hydrogen activity is less than 3.5 µmol per gram of silicon, preferably less than 3 µmol per gram of silicon.

Further preferred composite particles of the invention include those in which:
(i) the porous particle framework has a total pore volume of micropores and mesopores as measured by nitrogen gas adsorption in the range from 0.5 to 1.6 cm³/g; a PD₅₀ pore diameter of no more than 8 nm; and preferably a PD₉₀ pore diameter of no more than 15 nm;
(ii) Z is no more than 10% and preferably Y is at least 30%;
(iii) the D₅₀ particle diameter is in the range from 1 to 18 µm;
(iv) the BET surface area is no more than 25 m²/g; and
(v) the 7-day hydrogen activity is less than 3 µmol per gram of silicon, preferably less than 2.5 µmol per gram of silicon.

Further preferred composite particles of the invention include those in which:
(i) the porous particle framework has a total pore volume of micropores and mesopores as measured by nitrogen gas adsorption in the range from 0.6 to 1.5 cm³/g; a PD₅₀ pore diameter of no more than 6 nm; and preferably a PD₉₀ pore diameter of no more than 12 nm;
(ii) Z is no more than 8% and preferably Y is at least 35%;
(iii) the D₅₀ particle diameter is in the range from 1.5 to 15 µm;
(iv) the BET surface area is no more than 20 m²/g; and
(v) the 7-day hydrogen activity is less than 2.5 µmol per gram of silicon, preferably less than 2 µmol per gram of silicon.

Further preferred composite particles of the invention include those in which:
(i) the porous particle framework has a total pore volume of micropores and mesopores as measured by nitrogen gas adsorption in the range from 0.65 to 1.4 cm³/g; a PD₅₀ pore diameter of no more than 2.5 nm; and preferably a PD₉₀ pore diameter of no more than 10 nm;
(ii) Z is no more than 8% and preferably Y is at least 35%;
(iii) the D₅₀ particle diameter is in the range from 1.5 to 12 µm;
(iv) the BET surface area is no more than 20 m²/g; and
(v) the 7-day hydrogen activity is less than 2 µmol per gram of silicon, preferably less than 1.5 µmol per gram of silicon.

Further preferred composite particles of the invention include those in which:
(i) the porous particle framework has a total pore volume of micropores and mesopores as measured by nitrogen gas adsorption in the range from 0.7 to 1.3 cm³/g; a PD₅₀ pore diameter of no more than 4 nm; and preferably a PD₉₀ pore diameter of no more than 8 nm;
(ii) Z is no more than 5% and preferably Y is at least 40%;
(iii) the D₅₀ particle diameter is in the range from 2 to 10 µm;
(iv) the BET surface area is no more than 15 m²/g; and
(v) the 7-day hydrogen activity is less than 1.5 µmol per gram of silicon, preferably less than 1.2 µmol per gram of silicon.

Further preferred composite particles of the invention include those in which:
(i) the porous particle framework has a total pore volume of micropores and mesopores as measured by nitrogen gas adsorption in the range from 0.75 to 1.2 cm³/g; a PD₅₀ pore diameter of no more than 3 nm; and preferably a PD₉₀ pore diameter of no more than 6 nm;
(ii) Z is no more than 5% and preferably Y is at least 40%;
(iii) the D₅₀ particle diameter is in the range from 2 to 10 µm;
(iv) the BET surface area is no more than 15 m²/g; and
(v) the 7-day hydrogen activity is less than 1.2 µmol per gram of silicon, preferably less than 1 µmol per gram of silicon.

Further preferred composite particles of the invention include those in which:
(i) the porous particle framework has a total pore volume of micropores and mesopores as measured by nitrogen gas adsorption in the range from 0.8 to 1.2 cm³/g; a PD₅₀ pore diameter of no more than 2 nm, and preferably a PD₉₀ pore diameter of no more than 5 nm;
(ii) Z is no more than 2% and preferably Y is at least 45%;
(iii) the D₅₀ particle diameter is in the range from 2.5 to 8 µm; and
(iv) the BET surface area is no more than 10 m²/g; and
(v) the 7-day hydrogen activity is less than 1 µmol per gram of silicon, preferably less than 0.8 µmol per gram of silicon.

The invention further provides a composition consisting of the composite particles of the third aspect.

The fourth aspect of the invention provides a process for preparing an electrode, the process comprising the steps of:
(a) combining the composite particles of the second or third aspect with an aqueous liquid and at least one binder;
(b) casting the slurry onto a current collector;
(c) drying the cast slurry to form a coating layer on the current collector.

The composite particles used in the fourth aspect of the invention may be in the form of a composition consisting of the composite particles of the second or third aspect.

As used herein, the term current collector refers to any conductive substrate that is capable of carrying a current to and from the electroactive particles in the composition. Examples of materials that can be used as the current collector include copper, aluminium, stainless steel, nickel, titanium and sintered carbon. Copper is a preferred material. The current collector is typically in the form of a foil or mesh having a thickness of between 3 to 500 µm. The particulate materials of the invention may be applied to one or both surfaces of the current collector to a thickness which is preferably in the range from 10 µm to 1 mm, for example from 20 to 500 µm, or from 50 to 200 µm.

The electrode is fabricated by combining the composite particles an aqueous liquid, at least one binder and optionally one or more viscosity modifying additives to form a slurry. The slurry is then cast onto the surface of a current collector and the solvent is removed, thereby forming an electrode layer on the surface of the current collector. Further steps, such as heat treatment to cure any binders and/or calendering of the electrode layer may be carried out as appropriate. The electrode layer suitably has a thickness in the range from 20 µm to 2 mm, preferably 20 µm to 1 mm, preferably 20 µm to 500 µm, preferably 20 µm to 200 µm, preferably 20 µm to 100 µm, preferably 20 µm to 50 µm.

In an alternative process, the slurry formed in step (a) may be formed into a freestanding film or mat comprising the particulate material of the invention, for instance by casting the slurry onto a suitable casting template, removing the solvent and then removing the casting template. The resulting film or mat is in the form of a cohesive, freestanding mass that may then be bonded to a current collector by known methods.

### EXAMPLES

### Example 1: Preparation of composite particles

A 5.0 L stirred pressure reactor was filled with 300 g of porous carbon particles having the properties set out in Table 1.

**Table 1**

| Porous particle sample no. | D₅₀ /µm | D₁₀ ; D₉₀ /µm | PV /g·cm⁻³ | MPF | BET /m²g⁻¹ | PD₅₀ ; PD₉₀ / nm |
|---|---|---|---|---|---|---|
| 1 | 6.73 | 3.65; 11.4 | 0.70 | 0.71 | 1704 | 0.98; 4.85 |

| | | | | | | |
|---|---|---|---|---|---|---|
| PV denotes the total volume of micropores and mesopores as measured by nitrogen gas adsorption; MPF denotes the micropore volume fraction, based on the total volume of micropores and mesopores in the porous particles; BET denotes the BET surface area of the porous particles. | | | | | | |

The reactor was sealed and slowly placed under vacuum (10 mbar) to remove the air and then filled with dry nitrogen or argon that was free of oxygen. The process was repeated three times to expel all of the air from the porous carbon particles. The reactor heated to 340 °C, evacuated again, and filled with silane to a pressure of 1.2 MPa. The reactor was then heated to 400 °C at a ramp rate of 10 °C /min and held at 400 °C for 30 mins. The reactor was then cooled to 340 °C and slowly depressurised. The reactor was then refilled with silane to 1.2 MPa and heated again to 400 °C at 10 °C/min and held there for a further 30 mins. The cooling and refilling steps were repeated for a total of 6 cycles.

The reactor was depressurised and filled with nitrogen or argon then ramped to 450 °C for 8 hours to anneal the composite particles.

The reactor was subsequently cooled to 200 °C and the composite particle product was then passivated with air by using a mixture of 10% air in nitrogen by evacuating the reactor and filling it with the gas to a pressure of 0.1 MPa and allowing it to stand for 15 minutes. This process was repeated 3 times using the mixture of 10% air in nitrogen, 3 times using 25% air in nitrogen, once with 50% air in nitrogen, once with 75% air in nitrogen, and finally with 100% air. The composite particle products have the properties set out in Table 2.

Sample A is a composite particle product prepared from porous particle sample 1.

**Table 2**

| Sample | D₅₀ /µm | D₁₀ ; D₉₀ /µm | Si /% | Coarse Si /% | BET /m²g⁻¹ | Oxygen /% |
|---|---|---|---|---|---|---|
| A | 7.5 | 4.54; 12.1 | 50.3 | 6.5 | 7.0 | 2.21 |

### Example 2: General Procedure for water treatment using water vapour

A 6.6 kg sample of composite particle product A obtained according to Example 1 was heated to 200 °C, under inert gas (nitrogen) in a stirred reactor. A humidifier connected to the reaction vessel was used to supply air saturated with water vapour at a specific relative humidity (RH%) in the range of 50% to 100% at a temperature of 80 °C. Once the desired temperature is reached, the reaction vessel was reduced to a set vacuum pressure (-0.9 bar) and the humidified air was supplied by the humidifier to a set pressure (0.3 bar). The humid air was kept at the required pressure for a set time of 7 minutes before reducing to a vacuum pressure again. This process was repeated for the specified number of pulses, i.e. for a set duration of time, more pulses giving a longer duration of humid air supply. Following the desired number of cycles the humid air supply was stopped by reducing the RH% = 0. After which 10 x cycles of dry air were passed into the reaction vessel to remove any excess humidity and the reactor was cooled to room temperature.

**Table 3**

| Sample | Relative Humidity /% | Reactor temp /°C | Number of pulses |
|---|---|---|---|
| B | 59 | 200 | 20 |
| C | 90 | 200 | 14 |

**Table 4**

| Sample | Si /% | Coarse Si /% | BET /m²g⁻¹ | Oxygen /% |
|---|---|---|---|---|
| B | 50.4 | 7.4 | 4.0 | 1.4 |
| C | 51.1 | 12.5 | 8.8 | 2.0 |

### Example 3 - General procedure for measurement of Hydrogen Activity

Samples are assessed for their hydrogen activity by storing 0.5 g of the composite particles in 10 g of deionised water in a 20 mL vial with an injectable vial cap for 7 days (168 hours) at 25 °C. The vials are stored upside down except during gas chromatography measurements.

Gas chromatography measurements were performed with a Perkin Elmer Clarus GC with an HTA headspace platform. The detector used was a pulsed discharge detector with helium as the ion source. The carrier gas used was Grade 6.0 (99.9999%) gas (O₂ <0.01 ppm, H₂O <0.02 ppm, THC <0.1 ppm, CO + CO₂ <0.1 ppm, N₂ <1 ppm, CFC < 0.001 ppm). The column used for gas chromatography was a CP-Molsieve 5Å (7536 fused silica; 25 m; 0.32 mm; 30 µm). The headspace is sampled by first extracting and reintroducing 2.5 mL of gas into the vial 5 times over, to ensure good mixing of the gas in the headspace. Then 1 mL of gas is extracted and injected into the GC unit at 20 mL/min. The injection port temperature is set at 150 °C, the detector temperature is set at 150 °C, the column oven temperature is set at 40°C. The carrier gas pressure is 82.74 kPa (12 psi).

The response on the detector of the GC unit is calibrated against commercial calibration standard gases to determine the response in ppm. This is then converted to moles of hydrogen gas (H₂) under the conversion of 22.4 litres per mole, and the known volume of gas.

The vials of composite plus water were continuously stored in a controlled environment at 25 °C. Vial caps were carefully crimped and checked as secure to avoid gas leakage. When they were not being measured or prepared for measurement, the vials were stored upside down, to isolate the vial cap from the gas-phase and further prevent potential hydrogen gas loss due to leakage. After a measurement, the vials were left to sit for at least 1 minute prior to re-capping and turning upside for storage, to allow any hydrogen gas to escape (this avoids double-counting for cumulative total.)

Each data point in the examples was measured with 2 or 3 repeats, and the numbers given are the average of the repeated measurements.

Measurements are taken after 1 day (24 hours), 2 days (48 hours), 3 days (72 hours) and 7 days (168 hours). The values for the 2-day hydrogen activity, 3-day hydrogen activity, and 7-day hydrogen activity are defined herein as the cumulative total of the measurements up to and including the specified day.

The results for Samples A-C are provided in Table 5.

**Table 5**

| Sample | Day 1 | Day 2 | Day 3 | Day 7 |
|---|---|---|---|---|
| A | 7.87 | 29.87 | 43.91 | ≥128.1* |
| B | 2.2 | 5.1 | 8.5 | 22.0 |
| C | 3.1 | 5.7 | 8.7 | 20.7 |

| | | | | |
|---|---|---|---|---|
| All measurements are µmol H₂ per g Si. * The GC system was the GC system was configured and calibrated to allow measurements of H₂ gas up to a maximum of 50,000 ppm - as determined by measurement of commercial calibration standard gases. The Day 7 measurement exceeded the maximum. For Sample A with Si content of 50.3%, 50,000ppm H₂ is equivalent to 84.2 µmol per g Si. This means the day 7 cumulative total for Sample A was at least 128.1 µmol H₂ per g Si. | | | | |

### Example 4: General Procedure for water treatment using liquid water

An 8 Kg sample of the composite particle product Sample A obtained according to Example 1 was combined with excess DI water at 20 °C to form a slurry and stirred for 60 minutes to ensure complete wetting of the composite particles. The slurry was filtered to form a damp filter cake comprising ca. 30 wt% water (based on the total mass of water + composite particles = 100%). The filter cake was then heated to the specified temperature in an open vessel and held at that temperature until the sample was dry (less than 1 wt% water). The sample was then cooled to ambient temperature under dry air.

The reaction conditions are set out In Table 6 and the properties of the composite particles are set out in Table 7.

**Table 6**

| Sample | Temperature /°C | Duration of water contact until dryness /min |
|---|---|---|
| D | 70 | 255 |
| E | 90 | 225 |
| F | 90 | 1350 |
| G | 90 | 1200 |

**Table 7**

| Sample | Si /% | Coarse Si /% | BET /m²g⁻¹ | Oxygen /% |
|---|---|---|---|---|
| D | 50.2 | 6.2 | 7.7 | 2.8 |
| E | 50.1 | 5.9 | 7.9 | 2.9 |
| F | 50 | 6.2 | 4.7 | 2.2 |
| G | 49.5 | 6.3 | 5.2 | 3.0 |

### Example 5 - Measurement of Hydrogen Activity

The composite particle Samples A and D-G were assessed for their hydrogen activity by the method of example 3. The results are provided in Table 8.

**Table 8**

| Sample | 2 day cumulative hydrogen activity /µmol per gram silicon | 7 day cumulative hydrogen activity /µmol per gram silicon |
|---|---|---|
| A | 29.87 | ≥128.1* |
| D | 2.32 | 5.84 |
| E | 3.53 | 11.22 |
| F | 1.61 | 3.46 |
| G | 2.37 | 6.70 |

| | | |
|---|---|---|
| *See notes to Table 5 | | |

### NUMBERED EMBODIMENTS

1. A process for preparing composite particles, the process comprising the steps of:
   (a) providing a plurality of porous particles comprising micropores and/or mesopores, wherein the total pore volume of micropores and mesopores as measured by nitrogen gas adsorption is in the range from 0.4 to 2.2 cm³/g;
   (b) contacting the porous particles with a silicon-containing precursor at a temperature and pressure effective to cause deposition of silicon in the pores of the porous particles to form silicon-containing composite particles;
   (c) optionally contacting the silicon-containing composite particles from step (b) with a passivating agent; and
   (d) contacting the silicon-containing composite particles from step (b) or step (c) with liquid water or a gas comprising water vapour, wherein said contacting is carried out at a temperature of at least 30 °C.
2. A process according to numbered embodiment 1, wherein the temperature in step (d) is in the range from 40 to 400°°C, or from 100 to 350°°C, or from 120 to 300°°C, or from 140 to 280°°C.
3. A process according to numbered embodiment 1 or numbered embodiment 2, wherein step (d) comprises contacting the silicon-containing composite particles from step (b) or step (c) with a gas comprising water vapour.
4. A process according to numbered embodiment 3, wherein the gas comprises from 1 mol% to 60 mol% water vapour, or from 2 mol% to 55 mol% water vapour, or from 3 mol% to 50 mol% water vapour, or from 4 mol% to 45 mol% water vapour, or from 5 mol% to 40 mol% water vapour, or from 8 mol% to 35 mol% water vapour, or from 10 mol% to 30 mol% water vapour, or from 12 mol% to 25 mol% water vapour, or from 15 mol% to 20 mol% water vapour.
5. A process according to numbered embodiment 3 or numbered embodiment 4, wherein the pressure in step (d) is in the range from 5 to 5000 kPa, or from 10 to 2000 kPa, or from 20 to 1000 kPa, or from 50 to 500 kPa, or from 80 to 200 kPa, or from 90 to 150 kPa, or from 95 to 120 kPa, or about 100 kPa.
6. A process according to any of numbered embodiments 3 to 5, wherein step (d) comprises an initial phase during which the gas comprises from 1 mol% to less than 10 mol% water vapour and a subsequent phase during which the water vapour content of the gas in increased to 10% mol% to 60 mol%.
7. A process according to any of numbered embodiments 3 to 6, wherein the gas further comprises oxygen, optionally wherein the gas is humidified air.
8. A process according to numbered embodiment 1, wherein step (d) comprises contacting the silicon-containing composite particles from step (b) or step (c) with liquid water.
9. A process according to numbered embodiment 8, wherein the temperature in step (d) is in the range from 30 to 150 °C, or in the range from 30 to 99.5 °C, or in the range from 40 to 99 °C, or in the range from 50 to 98 °C, or in the range from 60 to 97 °C, or in the range from 70 to 96 °C, or in the range from 80 to 95 °C.
10. A process according to numbered embodiment 8 or numbered embodiment 9, wherein the pressure in step (d) is in the range from 1 to 1,000 kPa, or from 1 to 500 kPa, or from 50 to 200 kPa, or from 80 to 150 kPa, or from 90 to 120 kPa, or about 100 kPa.
11. A process according to any of numbered embodiments 8 to 10, wherein the silicon-containing composite particles and water are in the form of an aqueous suspension (slurry) comprising greater than 60 wt% water, or greater than 80 wt% water; or in the form of a moistened cake comprising from 2 to 60 wt% water, based on the total amount of water and silicon-containing composite particles.
12. A process according to any of numbered embodiments 8 to 11, wherein the total duration of contacting in step (d) is in the range from 5 minutes to 24 hours, or from 10 minutes to 12 hours, or from 15 minutes to 6 hours, or from 20 minutes to 5 hours, or from 25 minutes to 3 hours, or from 30 minutes to 2 hours.
13. A process according to any of numbered embodiments 8 to 12, wherein the composite particles are dried following step (d).
14. A process according to any of the preceding numbered embodiments, wherein the total pore volume of micropores and mesopores as measured by nitrogen gas adsorption in the porous particles used in step (a) is in the range from 0.45 to 2 cm³/g, or from 0.5 to 1.8 cm³/g, or from 0.55 to 1.6 cm³/g, or from 0.6 to 1.5 cm³/g, or from 0.65 to 1.4 cm³/g, or from 0.7 to 1.3 cm³/g, or from 0.75 to 1.2. cm³/g.
15. A process according to any preceding numbered embodiment, wherein the PD₅₀ pore diameter of the porous particles used in step (a) is no more than 10 nm, or no more than 8 nm, or no more than 6 nm, or no more than 5 nm, or no more than 4 nm, or no more than 3 nm, or no more than 2.5 nm, or no more than 2 nm, or no more than 1.9 nm, or no more than 1.8 nm, or no more than 1.7 nm, or no more than 1.6 nm.
16. A process according to any preceding numbered embodiment, wherein the PD₉₀ pore diameter of the porous particles used in step (a) is no more than 20 nm, or no more than 15 nm, or no more than 12 nm, or no more than 10 nm, or no more than 8 nm, or no more than 6 nm, or no more than 5 nm.
17. A process according to any preceding numbered embodiment, wherein the micropore volume fraction of the porous particles used in step (a) is at least 0.4, or at least 0.45, or at least 0.5, or at least 0.55, or at least 0.6 based on the total volume of micropores and mesopores in the porous particles.
18. A process according to any preceding numbered embodiment, wherein the micropore volume fraction of the porous particles used in step (a) is no more than 0.85, or no more than 0.8, or no more than 0.75, or no more than 0.7, based on the total volume of micropores and mesopores in the porous particles.
19. A process according to any preceding numbered embodiment, wherein the porous particles used in step (a) have a BET surface area in the range from 500 m²/g to 4,000 m²/g, or from 750 m²/g to 3,500 m²/g, or from 1,000 m²/g to 3,250 m²/g, or from 1,000 m²/g to 3,000 m²/g, or from 1,000 m²/g to 2,500 m²/g, or from 1,000 m²/g to 2,000 m²/g.
20. A process according to any preceding numbered embodiment, wherein the porous particles are conductive porous particles, preferably conductive porous carbon particles, more preferably conductive porous carbon particles comprising at least 80 wt% carbon, or at least 85 wt% carbon, or at least 90 wt% carbon, or at least 95 wt% carbon.
21. A process according to any preceding numbered embodiment, wherein the silicon-containing precursor used in step (b) is gaseous, optionally wherein the silicon-containing precursor is selected from silane (SiH₄), disilane (Si₂H₆), trisilane (Si₃H₈) methylsilane, dimethylsilane and chlorosilanes.
22. A process according to any preceding numbered embodiment, wherein the temperature in step (b) is in the range from 340 to 500 °C, or from 350 to 480 °C, or from 350 to 450 °C, or from 350 to 420 °C, or from 350 to less than 400 °C, or from 355 to 395 °C, or from 360 to 390 °C, or from 365 to 385 °C, or from 370 to 380 °C.
23. A process according to any preceding numbered embodiment, wherein the pressure in step (b) is in the range from 10 to 10000 kPa, or from 20 to 5000 kPa, or from 50 to 2000 kPa, or from 60 to 1500 kPa, or from 70 to 1000 kPa, or from 80 to 800 kPa, or from 90 to 600 kPa.
24. A process according to any preceding numbered embodiment, wherein the particles formed in step (b) comprise at least 26 wt% silicon, or at least 28 wt% silicon, or at least 30 wt% silicon, or at least 32 wt% silicon, or at least 34 wt% silicon, or at least 36 wt% silicon, or at least 38 wt% silicon, or at least 40 wt% silicon, or at least 42 wt% silicon, or at least 44 wt% silicon, based on the total mass of the particles.
25. A process according to any preceding numbered embodiment, wherein the weight ratio of silicon deposited in step (b) to the porous particles in the range from [0.50×P¹ to 1.9×P¹] : 1, or from [0.6×P¹ to 1.8×P¹] : 1 or from [0.7×P¹ to 1.7×P¹] : 1, or from [0.8×P¹ to 1.6×P¹] : 1, wherein P¹ is a dimensionless number having the same value as the total pore volume of micropores and mesopores in the porous particles as measured by gas adsorption as expressed in cm³/g.
26. A process according to any preceding numbered embodiment, wherein step (c) is present.
27. A process according to numbered embodiment 26, wherein step (c) comprises contacting the silicon-containing composite particles from step (b) with a passivating agent selected from (i) an oxygen containing gas; (ii) ammonia; (iii) a gas comprising ammonia and oxygen; and (iv) phosphine.
28. A process according to numbered embodiment 26, wherein step (c) comprises contacting the silicon-containing composite particles from step (b) with a passivating agent selected from:
   (i)

      R¹-CH=CH-R¹;
   (ii)

      R¹-C≡C-R¹;
   (iii)

      O=CR¹R¹;
   (iv)

      HX-R²,

      and
   (v)

      HX-C(O)-R¹,

   wherein X represents O, S, NR¹ or PR¹; and
   wherein each R¹ independently represents H or an unsubstituted or substituted aliphatic or aromatic hydrocarbyl group having from 1 to 20 carbon atoms, or wherein two R¹ groups form an unsubstituted or substituted ring structure comprising from 3 to 8 carbon atoms in the ring;
   wherein R² represents an unsubstituted or substituted aliphatic or aromatic hydrocarbyl group having from 1 to 20 carbon atoms, or wherein R¹ and R² together form an unsubstituted or substituted ring structure comprising from 3 to 8 carbon atoms in the ring.
29. A process according to any preceding numbered embodiment, further comprising the step of subjecting the particles from step (b) to heat treatment at a temperature of at least 400 °C and in the presence of an inert atmosphere prior to the subsequent step.
30. A process according to any preceding numbered embodiment, wherein the composite particles obtained from step (d) have a total oxygen content of less than 6 wt%, or less than 5 wt%, or less than 4.5 wt%, or less than 4 wt%, or less than 3.5 wt%, or less than 3.2 wt%, or less than 3 wt%, or less than 2 wt%, or less than 1 wt%, or less than 0.5 wt% based on the total mass of the composite particles.
31. A process according to any preceding numbered embodiment, wherein the composite particles obtained from step (d) have a 7-day hydrogen activity in water of less than 40 µmol·per gram of silicon, or less than 35 µmol per gram of silicon, or less than 30 µmol per gram of silicon, or less than 25 µmol per gram of silicon, or less than 20 µmol per gram of silicon, or less than 15 µmol per gram of silicon, or less than 12 µmol per gram of silicon, or less than 10 µmol per gram of silicon, or less than 8 µmol·per gram of silicon, or less than 7 µmol·per gram of silicon, or less than 6 µmol·per gram of silicon, or less than 5.5 µmol per gram of silicon, or less than 5 µmol per gram of silicon, or less than 4.5 µmol per gram of silicon, or less than 4 µmol·per gram of silicon, or less than 3.5 µmol per gram of silicon, or less than 3 µmol per gram of silicon, or less than 2.5 µmol per gram of silicon, or less than 2 µmol per gram of silicon.
32. A process according to any preceding numbered embodiment, wherein the composite particles obtained from step (d) have a 7-day hydrogen activity in water of at least 0.1 µmol·per gram of silicon, or at least 0.2 µmol·per gram of silicon, or at least 0.3 µmol·per gram of silicon, or at least 0.4 µmol·per gram of silicon, or at least 0.5 µmol·per gram of silicon, or at least 0.6 µmol·per gram of silicon, or at least 0.8 µmol·per gram of silicon, or at least 1 µmol·per gram of silicon.
33. Composite particles obtainable by the process of any of the preceding numbered embodiments.
34. Composite particles comprising a porous particle framework and silicon, wherein:
   (a) the porous particle framework comprises micropores and/or mesopores, wherein the total pore volume of micropores and mesopores as measured by nitrogen gas adsorption is in the range from 0.4 to 2.2 cm³/g;
   (b) the silicon is located within the micropores and/or mesopores of the porous particle framework;
   wherein the composite particles have a 7-day hydrogen activity in water of less than 40 µmol·per gram of silicon.
35. Composite particles according to numbered embodiment 34, wherein the composite particles have a 7-day hydrogen activity in water of less than 35 µmol per gram of silicon, or less than 30 µmol per gram of silicon, or less than 25 µmol per gram of silicon, or less than 20 µmol per gram of silicon, or less than 15 µmol per gram of silicon, or less than 12 µmol per gram of silicon, or less than 10 µmol per gram of silicon, or less than 8 µmol·per gram of silicon, or less than 7 µmol·per gram of silicon, less than 6 µmol·per gram of silicon, or less than 5.5 µmol·per gram of silicon, or less than 5 µmol·per gram of silicon, less than 4.5 µmol·per gram of silicon, or less than 4 µmol per gram of silicon, or less than 3.5 µmol per gram of silicon, or less than 3 µmol per gram of silicon, or less than 2.5 µmol per gram of silicon, or less than 2 µmol per gram of silicon.
36. Composite particles according to numbered embodiment 34 or numbered embodiment 35, wherein the composite particles obtained from step (d) have a 7-day hydrogen activity in water of at least 0.1 µmol·per gram of silicon, or at least 0.2 µmol·per gram of silicon, or at least 0.3 µmol·per gram of silicon, or at least 0.4 µmol·per gram of silicon, or at least 0.5 µmol·per gram of silicon, or at least 0.6 µmol·per gram of silicon, or at least 0.8 µmol·per gram of silicon, or at least 1 µmol·per gram of silicon.
37. Composite particles according according to any of numbered embodiments 34 to 36, wherein the composite particles have a total oxygen content of less than 5 wt%, or less than 4.5 wt%, or less than 4 wt%, or less than 3.5 wt%, or less than 3.2 wt%, or less than 3 wt%, or less than 2 wt%, or less than 1 wt%, or less than 0.5 wt% based on the total mass of the composite particles.
38. Composite particles according to any of numbered embodiments 34 to 37, wherein the total pore volume of micropores and mesopores in the porous particle framework as measured by nitrogen gas adsorption is in the range from 0.45 to 2 cm³/g, or from 0.5 to 1.8 cm³/g, or from 0.55 to 1.6 cm³/g, or from 0.6 to 1.5 cm³/g, or from 0.65 to 1.4 cm³/g, or from 0.7 to 1.3 cm³/g, or from 0.75 to 1.2. cm³/g.
39. Composite particles according to any of numbered embodiments 34 to 38, wherein the PD₅₀ pore diameter of the porous particle framework is no more than 10 nm, or no more than 8 nm, or no more than 6 nm, or no more than 5 nm, or no more than 4 nm, or no more than 3 nm, or no more than 2.5 nm, or no more than 2 nm, or no more than 1.9 nm, or no more than 1.8 nm, or no more than 1.7 nm, or no more than 1.6 nm.
40. Composite particles according to any of numbered embodiments 34 to 39, wherein the PD₉₀ pore diameter of the porous particle framework is no more than 20 nm, or no more than 15 nm, or no more than 12 nm, or no more than 10 nm, or no more than 8 nm, or no more than 6 nm, or no more than 5 nm.
41. Composite particles according to any of numbered embodiments 34 to 40, wherein the micropore volume fraction of the porous particle framework is at least 0.4, or at least 0.45, or at least 0.5, or at least 0.55, or at least 0.6 a
42. Composite particles according to any of numbered embodiments 34 to 41, wherein the micropore volume fraction of the porous particle framework is no more than 0.85, or no more than 0.8, or no more than 0.75, or no more than 0.7 based on the total volume of micropores and mesopores in the porous particles.
43. Composite particles according to any of numbered embodiments 34 to 42, wherein the porous particle framework has a BET surface area in the range from 100 to 4,000 m²/g, or from 500 to 4,000 m²/g, or from 750 to 3,500 m²/g, or from 1,000 to 3,250 m²/g, or from 1,000 to 3,000 m²/g, or from 1,000 to 2,500 m²/g, or from 1,000 to 2,000 m²/g.
44. Composite particles according to any of numbered embodiments 34 to 43, wherein the porous particle framework is a conductive porous particle framework, preferably a conductive porous carbon particle framework, more preferably a conductive porous carbon particle framework comprising at least 80 wt% carbon, or at least 85 wt% carbon, or at least 90 wt% carbon, or at least 95 wt% carbon.
45. Composite particles according to any of numbered embodiments 34 to 44, comprising at least 26 wt% silicon, or at least 28 wt% silicon, or at least 30 wt% silicon, or at least 32 wt% silicon, or at least 34 wt% silicon, or at least 36 wt% silicon, or at least 38 wt% silicon, or at least 40 wt% silicon, or at least 42 wt% silicon, or at least 44 wt% silicon.
46. Composite particles according to any of numbered embodiments 34 to 45, comprising no more than 64 wt% silicon, or no more than 62 wt% silicon, or no more than 60 wt% silicon, or no more than 58 wt% silicon, or no more than 56 wt% silicon, or no more than 54 wt% silicon.
47. Composite particles according to any of numbered embodiments 34 to 46, wherein at least 25 wt%, or at least 30 wt%, or at least 35 wt%, or at least 40 wt% of the silicon, or at least 45 wt% of the silicon is surface silicon as determined by thermogravimetric analysis (TGA).
48. Composite particles according to any of numbered embodiments 34 to 47, wherein no more than 10 wt% of the silicon, or no more than 8 wt% of the silicon, or no more than 6 wt% of the silicon, or no more than 5 wt%,or no more than 4 wt%, or no more than 3 wt%, or no more than 2 wt% or no more than 1.5 wt% of the silicon is coarse bulk silicon as determined by thermogravimetric analysis (TGA).
49. Composite particles according to any of numbered embodiments 34 to 48, wherein the composite particles have a D₅₀ particle diameter in the range of 1 to 25 µm.
50. Composite particles according to any of numbered embodiments 34 to 49, wherein the composite particles have a BET surface area of no more than 100 m²/g, or no more than 80 m²/g, or no more than 60 m²/g, or no more than 50 m²/g, or no more than 40 m²/g, or no more than 30 m²/g, or no more than 25 m²/g, or no more than 20 m²/g, or no more than 15 m²/g, or no more than 10 m²/g.
51. A composition consisting of the composite particles of any of numbered embodiments 33 to 50.
52. A process for preparing an electrode, the process comprising the steps of:
   (a) combining the composite particles of any of numbered embodiments 33 to 50 with an aqueous liquid and at least one binder to form a slurry;
   (b) casting the slurry onto a current collector;
   (c) drying the cast slurry to form a coating layer on the current collector.

## Claims

1. Composite particles comprising a porous particle framework and silicon, wherein:
(a) the porous particle framework comprises micropores and/or mesopores, wherein the total pore volume of micropores and mesopores as measured by nitrogen gas adsorption is in the range from 0.4 to 2.2 cm³/g;
(b) the silicon is located within the micropores and/or mesopores of the porous particle framework;
wherein the composite particles have a 7-day hydrogen activity in water of less than 40 µmol·per gram of silicon.

2. Composite particles according to claim 1, wherein the composite particles have a 7-day hydrogen activity in water of less than 35 µmol per gram of silicon, or less than 30 µmol per gram of silicon, or less than 25 µmol per gram of silicon, or less than 20 µmol per gram of silicon, or less than 15 µmol per gram of silicon, or less than 12 µmol per gram of silicon, or less than 10 µmol per gram of silicon, or less than 8 µmol·per gram of silicon, or less than 7 µmol·per gram of silicon, less than 6 µmol·per gram of silicon, or less than 5.5 µmol·per gram of silicon, or less than 5 µmol·per gram of silicon, less than 4.5 µmol·per gram of silicon, or less than 4 µmol per gram of silicon, or less than 3.5 µmol per gram of silicon, or less than 3 µmol per gram of silicon, or less than 2.5 µmol per gram of silicon, or less than 2 µmol per gram of silicon.

3. Composite particles according to claim 1 or claim 2, wherein the composite particles obtained from step (d) have a 7-day hydrogen activity in water of at least 0.1 µmol·per gram of silicon, or at least 0.2 µmol·per gram of silicon, or at least 0.3 µmol·per gram of silicon, or at least 0.4 µmol·per gram of silicon, or at least 0.5 µmol·per gram of silicon, or at least 0.6 µmol·per gram of silicon, or at least 0.8 µmol·per gram of silicon, or at least 1 µmol·per gram of silicon.

4. Composite particles according according to any of claims 1 to 3, wherein the composite particles have a total oxygen content of less than 5 wt%, or less than 4.5 wt%, or less than 4 wt%, or less than 3.5 wt%, or less than 3.2 wt%, or less than 3 wt%, or less than 2 wt%, or less than 1 wt%, or less than 0.5 wt% based on the total mass of the composite particles.

5. Composite particles according to any of claims 1 to 4, wherein the total pore volume of micropores and mesopores in the porous particle framework as measured by nitrogen gas adsorption is in the range from 0.45 to 2 cm³/g, or from 0.5 to 1.8 cm³/g, or from 0.55 to 1.6 cm³/g, or from 0.6 to 1.5 cm³/g, or from 0.65 to 1.4 cm³/g, or from 0.7 to 1.3 cm³/g, or from 0.75 to 1.2. cm³/g.

6. Composite particles according to any of claims 1 to 5, wherein the PD₅₀ pore diameter of the porous particle framework is no more than 10 nm, or no more than 8 nm, or no more than 6 nm, or no more than 5 nm, or no more than 4 nm, or no more than 3 nm, or no more than 2.5 nm, or no more than 2 nm, or no more than 1.9 nm, or no more than 1.8 nm, or no more than 1.7 nm, or no more than 1.6 nm; and/or wherein the PD₉₀ pore diameter of the porous particle framework is no more than 20 nm, or no more than 15 nm, or no more than 12 nm, or no more than 10 nm, or no more than 8 nm, or no more than 6 nm, or no more than 5 nm.

7. Composite particles according to any of claims 1 to 6, wherein the micropore volume fraction of the porous particle framework is at least 0.4, or at least 0.45, or at least 0.5, or at least 0.55, or at least 0.6; and/or wherein the micropore volume fraction of the porous particle framework is no more than 0.85, or no more than 0.8, or no more than 0.75, or no more than 0.7 based on the total volume of micropores and mesopores in the porous particles.

8. Composite particles according to any of claims 1 to 7, wherein the porous particle framework has a BET surface area in the range from 100 to 4,000 m²/g, or from 500 to 4,000 m²/g, or from 750 to 3,500 m²/g, or from 1,000 to 3,250 m²/g, or from 1,000 to 3,000 m²/g, or from 1,000 to 2,500 m²/g, or from 1,000 to 2,000 m²/g.

9. Composite particles according to any of claims 1 to 8, wherein the porous particle framework is a conductive porous particle framework, preferably a conductive porous carbon particle framework, more preferably a conductive porous carbon particle framework comprising at least 80 wt% carbon, or at least 85 wt% carbon, or at least 90 wt% carbon, or at least 95 wt% carbon.

10. Composite particles according to any of claims 1 to 9, comprising at least 26 wt% silicon, or at least 28 wt% silicon, or at least 30 wt% silicon, or at least 32 wt% silicon, or at least 34 wt% silicon, or at least 36 wt% silicon, or at least 38 wt% silicon, or at least 40 wt% silicon, or at least 42 wt% silicon, or at least 44 wt% silicon; and/or comprising no more than 64 wt% silicon, or no more than 62 wt% silicon, or no more than 60 wt% silicon, or no more than 58 wt% silicon, or no more than 56 wt% silicon, or no more than 54 wt% silicon.

11. Composite particles according to any of claims 1 to 10, wherein at least 25 wt%, or at least 30 wt%, or at least 35 wt%, or at least 40 wt% of the silicon, or at least 45 wt% of the silicon is surface silicon as determined by thermogravimetric analysis (TGA); and/or wherein no more than 10 wt% of the silicon, or no more than 8 wt% of the silicon, or no more than 6 wt% of the silicon, or no more than 5 wt%,or no more than 4 wt%, or no more than 3 wt%, or no more than 2 wt% or no more than 1.5 wt% of the silicon is coarse bulk silicon as determined by thermogravimetric analysis (TGA).

12. Composite particles according to any of claims 1 to 11, wherein the composite particles have a D₅₀ particle diameter in the range of 1 to 25 µm.

13. Composite particles according to any of claims 1 to 12, wherein the composite particles have a BET surface area of no more than 100 m²/g, or no more than 80 m²/g, or no more than 60 m²/g, or no more than 50 m²/g, or no more than 40 m²/g, or no more than 30 m²/g, or no more than 25 m²/g, or no more than 20 m²/g, or no more than 15 m²/g, or no more than 10 m²/g.

14. A composition consisting of the composite particles of any of claims 1 to 13.

15. A process for preparing an electrode, the process comprising the steps of:
(a) combining the composite particles of any of claims 1 to 13 with an aqueous liquid and at least one binder to form a slurry;
(b) casting the slurry onto a current collector;
(c) drying the cast slurry to form a coating layer on the current collector.
